# EUROPEAN PATENT SPECIFICATION

(11) **EP 4 180 289 B1**
(45) Date of publication and mention of the grant of the patent: **02.04.2025**
(21) Application number: 20947081.4
(22) Date of filing: 29.07.2020
(51) Int. Cl.: B60T 13/66, B60T 13/68, B60T 11/24

(54) **HYDRAULIC ADJUSTING UNIT, BRAKING SYSTEM, VEHICLE, AND CONTROL METHOD**
HYDRAULISCHE VERSTELLEINHEIT, BREMSSYSTEM, FAHRZEUG UND STEUERUNGSVERFAHREN
UNITÉ DE RÉGLAGE HYDRAULIQUE, SYSTÈME DE FREINAGE, VÉHICULE ET PROCÉDÉ DE COMMANDE

(43) Date of publication of application: 17.05.2023
(73) Proprietor: Shenzhen Yinwang Intelligent Technologies Co., Ltd., Shenzhen, Guangdong 518129 (CN)
(72) Inventor: LIU, Donghao, Shenzhen, Guangdong 518129 (CN); YANG, Weimiao, Shenzhen, Guangdong 518129 (CN); ZHANG, Yongsheng, Shenzhen, Guangdong 518129 (CN)
(74) Representative: Pfenning, Meinig & Partner mbB
(86) International application number: PCT/CN2020/105346
(87) International publication number: WO 2022/021106

(56) References cited:
- EP-A1- 4 137 725
- CN-A- 102 556 025
- CN-A- 102 656 068
- CN-A- 105 691 370
- CN-A- 109 552 291
- CN-A- 111 038 470
- CN-U- 209 955 966
- US-A1- 2007 278 855
- US-A1- 2011 241 419
- US-A1- 2013 213 025
- US-A1- 2017 106 846
- US-A1- 2019 100 186
- US-A1- 2019 329 750
- US-A1- 2020 180 580
- US-A1- 2020 223 415

## Description

### TECHNICAL FIELD

This inventionrelates to the vehicle field, and more specifically, to a hydraulic adjustment unit, a braking system, a vehicle, and a control method.

### BACKGROUND

A braking system of a vehicle is a system that applies brake force to a wheel of the vehicle to force the vehicle to brake to a degree. The braking system is used to force a traveling vehicle to decelerate or even stop based on a requirement of a driver or a controller, or stabilize a stopped vehicle under various road conditions (for example, on a slope), or stabilize a speed of a vehicle traveling downhill.

As a popular braking system, an electro-hydraulic brake (Electro-Hydraulic Brake, EHB) system generally includes a dual-loop braking system and a distributed braking system. For the dual-loop braking system, a hydraulic adjustment apparatus is configured to provide brake force for a first group of wheels by using a first brake pipeline, and the hydraulic adjustment apparatus provides brake force for a second group of wheels by using a second brake pipeline. Currently, a hydraulic adjustment apparatus having a two-way pressurization function is generally used as the hydraulic adjustment apparatus in the foregoing dual-loop braking system.

In a conventional dual-loop braking system, the first brake pipeline communicates with the second brake pipeline. In this case, in a forward pressurization process of the hydraulic adjustment apparatus having a two-way pressurization function, a second hydraulic cavity of the hydraulic adjustment apparatus inputs, by using the second brake pipeline, brake fluid into a braking loop in which the second group of wheels is located, to provide brake force for the second group of wheels. Because the second brake pipeline communicates with the first brake pipeline, the brake fluid in the second brake pipeline also flows into the first brake pipeline, and the brake fluid is input, by using the first brake pipeline, into a brake loop in which the first group of wheels is located, to provide brake force for the first group of wheels.

Correspondingly, in a backward pressurization process, a first hydraulic cavity of the hydraulic adjustment apparatus inputs, by using the first brake pipeline, brake fluid into the brake loop in which the first group of wheels is located, to provide brake force for the first group of wheels. Because the first brake pipeline communicates with the second brake pipeline, the brake fluid in the first brake pipeline also flows into the second brake pipeline, and the brake fluid is input, by using the second brake pipeline, into the brake loop in which the second group of wheels is located, to provide brake force for the second group of wheels.

However, in the foregoing dual-loop braking system, after brake fluid in the brake loop in which the first group of wheels is located or the brake loop in which the second group of wheels is located leaks, the hydraulic adjustment apparatus having a two-way pressurization function cannot provide, by using the forward pressurization process and the backward pressurization process, brake force for a brake loop that may normally work. This limits pressurization efficiency of the hydraulic adjustment apparatus having a two-way pressurization function for the brake loop that normally works.
US 2017/106846 A1 provides an electric brake system comprising: a hydraulic pressure supply device configured to generate hydraulic pressure using a hydraulic piston which is activated by means of an electrical signal that is output corresponding to a displacement of a brake pedal, and including a cylinder block, first and second hydraulic pistons movably accommodated inside the cylinder block, and first and second pressure chambers comparted by the first and second hydraulic pistons; a first hydraulic circuit configured to connect a first hydraulic flow path communicating with the first pressure chamber to one or more wheel cylinders; a second hydraulic circuit configured to connect a second hydraulic flow path communicating with the second pressure chamber to one or more wheel cylinders; and a balance valve configured to open and close a balance flow path connecting the first hydraulic flow path to the second hydraulic flow path.

### SUMMARY

This invention provides a hydraulic adjustment unit, a braking system, a vehicle, and a control method, to independently pressurize either brake loop in a dual brake loop in a two-way pressurization manner, so as to help improve pressurization efficiency of a hydraulic adjustment apparatus having a two-way pressurization function for a brake loop that normally works. The invention as claimed is defined in the independent claims.

According to a first aspect, a hydraulic adjustment unit is provided, including a first hydraulic adjustment apparatus 107 having a two-way pressurization function. The first hydraulic adjustment apparatus 107 includes a first hydraulic cavity 25 and a second hydraulic cavity 27, the first hydraulic cavity 25 communicates with a first brake pipeline 110, the second hydraulic cavity 27 communicates with a second brake pipeline 120, and the first brake pipeline 110 and the second brake pipeline 120 communicate with each other by using a fifth brake pipeline 150. The first brake pipeline 110 communicates with a third brake pipeline 130 the third brake pipeline 130 communicates with the fifth brake pipeline 150, the second brake pipeline 120 communicates with the third brake pipeline 130 by using the fifth brake pipeline 150, the third brake pipeline 130 provides brake force for a first group of wheels 43, 44, and a first control valve 32 is disposed on the third brake pipeline 130, to control connection/disconnection of the third brake pipeline 130. The second brake pipeline 120 communicates with a fourth brake pipeline 140, the fourth brake pipeline 140 communicates with the fifth brake pipeline 150, the first brake pipeline 110 communicates with the fourth brake pipeline 140 by using the fifth brake pipeline 150, the fourth brake pipeline 140 provides brake force for a second group of wheels 45, 46, and a second control valve 34 is disposed on the fourth brake pipeline 140, to control connection/disconnection of the fourth brake pipeline 140.

In this embodiment of this invention, the first hydraulic cavity 25 separately communicates with the third brake pipeline 130 and the fourth brake pipeline 140 by using the first brake pipeline 110, the second hydraulic cavity 27 separately communicates with the third brake pipeline 130 and the fourth brake pipeline 140 by using the second brake pipeline 120, and the first control valve 32 and the second control valve 34 are respectively disposed on the third brake pipeline 130 and the fourth brake pipeline 140, to control connection/disconnection between the third brake pipeline 130 and the fourth brake pipeline 140, so that the first hydraulic adjustment apparatus 107 can provide brake force for the first group of wheels 43, 44 by using the third brake pipeline 130 in a two-way pressurization manner, or the first hydraulic adjustment apparatus 107 can provide brake force for the second group of wheels 45, 46 by using the fourth brake pipeline 140 in a two-way pressurization manner.

Further, when a first brake loop 105 configured to provide brake force for the first group of wheels 43, 44 leaks, the first control valve 32 may be controlled to be in a close state, and the second control valve 34 may be controlled to be in an open state. In this case, the first hydraulic adjustment apparatus 107 may still provide brake force for the second group of wheels 45, 46 by using a two-way pressurization process. Correspondingly, when a second brake loop 106 configured to provide brake force for the second group of wheels 45, 46 leaks, the second control valve 34 may be controlled to be in a close state, and the first control valve 32 may be controlled to be in an open state. In this case, the first hydraulic adjustment apparatus 107 may still provide brake force for the first group of wheels 43, 44 by using a two-way pressurization process. Therefore, when the first brake loop 105 or the second brake loop 106 leaks, it is ensured that the first hydraulic adjustment apparatus 107 provides brake force for corresponding wheels in a two-way pressurization manner, to improve pressurization efficiency of a braking system.

In a possible implementation, a third control valve 29 is disposed on the first brake pipeline 110, and the third control valve 29 is configured to control connection/disconnection of the first brake pipeline 110.

In this embodiment of this invention, the third control valve 29 is disposed on the first brake pipeline 110, to cooperate with the first hydraulic adjustment apparatus 107 to implement backward pressurization.

In a possible implementation, a first one-way valve 28 is further disposed on the first brake pipeline 110, the first one-way valve 28 is connected in parallel with the third control valve 29, and the first one-way valve 28 allows brake fluid in the first hydraulic cavity 25 to flow into the fifth brake pipeline 150, and blocks brake fluid in the fifth brake pipeline 150 from flowing into the first hydraulic cavity 25.

In this embodiment of this invention, the third control valve 29 is connected in parallel with two ends of the first one-way valve 28, so that the one-way valve is used as a backup of the control valve, to improve redundancy performance of the braking system.

In a possible implementation, a fourth control valve 31 is disposed on the second brake pipeline 120, and the fourth control valve 31 is configured to control connection/disconnection of the second brake pipeline 120.

In this embodiment of this invention, the fourth control valve 31 is disposed on the second brake pipeline 120, to cooperate with the first hydraulic adjustment apparatus 107 to implement backward pressurization.

In a possible implementation, a second one-way valve 30 is further disposed on the second brake pipeline 120, the second one-way valve 30 is connected in parallel with the fourth control valve 31, and the second one-way valve 30 allows brake fluid in the second hydraulic cavity 27 to flow into the fifth brake pipeline 150, and blocks brake fluid in the fifth brake pipeline 150 from flowing into the second hydraulic cavity 27.

In this embodiment of this invention, the fourth control valve 31 is connected in parallel with two ends of the second one-way valve 30, so that the one-way valve is used as a backup of the control valve, to improve redundancy performance of the braking system.

In a possible implementation, a pressure sensor 33 is disposed on the fifth brake pipeline 150 to detect pressure of the brake fluid in the fifth brake pipeline 150.

In this embodiment of this invention, the pressure sensor 33 is disposed on the fifth brake pipeline 150, to detect the pressure of the brake fluid in the fifth brake pipeline 150 by using the pressure sensor 33, and detect pressure of brake fluid in the first brake pipeline 110 and the second brake pipeline 120 by detecting the pressure of the brake fluid in the fifth brake pipeline 150, so as to reduce a quantity of pressure sensors in the braking system, and reduce costs of the braking system.

In a possible implementation, the hydraulic adjustment unit further includes a second hydraulic adjustment apparatus 108, and the second hydraulic adjustment apparatus 108 separately communicates with the third brake pipeline 130 and the fourth brake pipeline 140 by using the fifth brake pipeline 150, to provide brake force for the first group of wheels 43, 44 and the second group of wheels 45, 46.

In this embodiment of this invention, the second hydraulic adjustment apparatus 108 is disposed on the fifth brake pipeline 150. In this way, the second hydraulic adjustment apparatus 108 may separately provide brake force for the first group of wheels 43, 44 and the second group of wheels 45, 46 by using the fifth brake pipeline 150, the third brake pipeline 130, and the fourth brake pipeline 140, that is, a brake pipeline that is in the first hydraulic adjustment apparatus 107 and that provides brake force for the first group of wheels 43, 44 and the second group of wheels 45, 46 is reused. This helps simplify a quantity of brake pipelines while improving redundancy performance for the braking system by using the second hydraulic adjustment apparatus 108.

According to a second aspect, a braking system is provided, including a first group of brake wheel cylinders that provides brake force for a first group of wheels 43, 44, a second group of brake wheel cylinders that provides brake force for a second group of wheels 45, 46, and the hydraulic adjustment unit in any one of the possible implementations of the first aspect, where the hydraulic adjustment unit adjusts pressure of brake fluid in the first group of brake wheel cylinders and/or the second group of brake wheel cylinders.

According to a third aspect, a vehicle is provided, including a first group of wheels 43, 44, a second group of wheels 45, 46, and the hydraulic adjustment unit according to the first aspect, where the hydraulic adjustment unit provides brake force for the first group of wheels 43, 44 and/or the second group of wheels 45, 46.

According to a fourth aspect, a control method for a braking system is provided, where the braking system includes a first hydraulic adjustment apparatus 107 having a two-way pressurization function. The first hydraulic adjustment apparatus 107 includes a first hydraulic cavity 25 and a second hydraulic cavity 27, the first hydraulic cavity 25 communicates with a first brake pipeline 110, the second hydraulic cavity 27 communicates with a second brake pipeline 120, and the first brake pipeline 110 and the second brake pipeline 120 communicate with each other by using a fifth brake pipeline 150. The first brake pipeline 110 communicates with a third brake pipeline 130, the third brake pipeline 130 communicates with the fifth brake pipeline 150, the second brake pipeline 120 communicates with the third brake pipeline 130 by using the fifth brake pipeline 150, the third brake pipeline 130 provides brake force for a first group of wheels 43, 44, and a first control valve 32 is disposed on the third brake pipeline 130, to control connection/disconnection of the third brake pipeline 130. The second brake pipeline 120 communicates with a fourth brake pipeline 140, the fourth brake pipeline 140 communicates with the fifth brake pipeline 150, the first brake pipeline 110 communicates with the fourth brake pipeline 140 by using the fifth brake pipeline 150, the fourth brake pipeline 140 provides brake force for a second group of wheels 45, 46, and a second control valve 34 is disposed on the fourth brake pipeline 140, to control connection/disconnection of the fourth brake pipeline 140. The second hydraulic cavity 27 provides brake force for the first group of wheels 43, 44 by using the second brake pipeline 120 and the third brake pipeline 130 that communicate with each other, and the second hydraulic cavity 27 provides brake force for the second group of wheels 45, 46 by using the second brake pipeline 120 and the fourth brake pipeline 140 that communicate with each other. The control method includes: A controller generates a control instruction, where the control instruction is used to control an open/close state of the first control valve 32 and/or the second control valve 34; and the controller sends the control instruction to the first control valve 32 and/or the second control valve 34.

In this embodiment of this invention, the first hydraulic cavity 25 separately communicates with the third brake pipeline 130 and the fourth brake pipeline 140 by using the first brake pipeline 110, the second hydraulic cavity 27 separately communicates with the third brake pipeline 130 and the fourth brake pipeline 140 by using the second brake pipeline 120, and the first control valve 32 and the second control valve 34 are respectively disposed on the third brake pipeline 130 and the fourth brake pipeline 140, to control connection/disconnection between the third brake pipeline 130 and the fourth brake pipeline 140, so that the first hydraulic adjustment apparatus 107 can provide brake force for the first group of wheels 43, 44 by using the third brake pipeline 130 in a two-way pressurization manner, or the first hydraulic adjustment apparatus 107 can provide brake force for the second group of wheels 45, 46 by using the fourth brake pipeline 140 in a two-way pressurization manner.

Further, when a first brake loop 105 configured to provide brake force for the first group of wheels 43, 44 leaks, the first control valve 32 may be controlled to be in a close state, and the second control valve 34 may be controlled to be in an open state. In this case, the first hydraulic adjustment apparatus 107 may still provide brake force for the second group of wheels 45, 46 by using a two-way pressurization process. Correspondingly, when a second brake loop 106 configured to provide brake force for the second group of wheels 45, 46 leaks, the second control valve 34 may be controlled to be in a close state, and the first control valve 32 may be controlled to be in an open state. In this case, the first hydraulic adjustment apparatus 107 may still provide brake force for the first group of wheels 43, 44 by using a two-way pressurization process. Therefore, when the first brake loop 105 or the second brake loop 106 leaks, it is ensured that the first hydraulic adjustment apparatus 107 provides brake force for corresponding wheels in a two-way pressurization manner, to improve pressurization efficiency of the braking system.

In a possible implementation, that a controller generates a control instruction includes: The controller generates the control instruction, where the control instruction is used to control the first control valve 32 to be in a close state and the second control valve 34 to be in an open state, so that the first hydraulic cavity 25 presses brake fluid into the fourth brake pipeline 140 by using the first brake pipeline 110 and the fifth brake pipeline 150 that communicate with each other, to provide brake force for the second group of wheels 45, 46, and the second hydraulic cavity 27 provides brake force for the second group of wheels 45, 46 by using the second brake pipeline 120 and the fourth brake pipeline 140 that communicate with each other.

In this embodiment of this invention, the first control valve 32 may be controlled to be in a close state, and the second control valve 34 may be controlled to be in an open state. In this case, the first hydraulic adjustment apparatus 107 may still provide brake force for the second group of wheels 45, 46 by using a two-way pressurization process, to improve pressurization efficiency of the braking system.

In a possible implementation, that a controller generates a control instruction includes: If a brake pipeline that is in the braking system and that provides brake force for the first group of wheels 43, 44 leaks, the controller generates the control instruction, where the control instruction is used to control the first control valve 32 to be in a close state and the second control valve 34 to be in an open state.

In this embodiment of this invention, when the brake pipeline that is in the braking system and that provides brake force for the first group of wheels 43, 44 leaks, the first control valve 32 may be controlled to be in a close state, and the second control valve 34 may be controlled to be in an open state. In this case, the first hydraulic adjustment apparatus 107 may still provide brake force for the second group of wheels 45, 46 by using a two-way pressurization process, to improve pressurization efficiency of the braking system.

In a possible implementation, the brake pipeline that is in the braking system and that provides brake force for the first group of wheels 43, 44 includes a brake pipeline other than the first brake pipeline 110 in the braking system, and the method further includes: The controller drives, by using a drive apparatus 23, a piston 26 of the first hydraulic adjustment apparatus 107 to move forward along an inner wall of a hydraulic cylinder of the first hydraulic adjustment apparatus 107, to provide brake force for the second group of wheels 45, 46; and the controller drives, by using the drive apparatus 23, the piston 26 to move backward along the inner wall of the hydraulic cylinder, to provide brake force for the second group of wheels 45, 46.

In this embodiment of this invention, if the brake pipeline that is in the braking system and that provides brake force for the first group of wheels 43, 44 includes a brake pipeline other than the first brake pipeline 110 in the braking system, when the brake pipeline that is in the braking system and that provides brake force for the first group of wheels 43, 44 leaks, the driving apparatus 23 may control the piston 26 to move forward or backward along the inner wall of the hydraulic cylinder of the hydraulic adjustment apparatus 107, to provide brake force for the second group of wheels 45, 46, so as to improve pressurization efficiency of the braking system.

In a possible implementation, that a controller generates a control instruction includes: The controller generates the control instruction, where the control instruction is used to control the second control valve 34 to be in a close state and the first control valve 32 to be in an open state, so that the second hydraulic cavity 27 presses brake fluid into the third brake pipeline 130 by using the second brake pipeline 120 and the fifth brake pipeline 150 that communicate with each other, to provide brake force for the first group of wheels 43, 44, and the first hydraulic cavity 25 provides brake force for the first group of wheels 43, 44 by using the first brake pipeline 110 and the third brake pipeline 130 that communicate with each other.

In this embodiment of this invention, the first control valve 32 may be controlled to be in an open state, and the second control valve 34 may be controlled to be in a close state. In this case, the first hydraulic adjustment apparatus 107 may still provide brake force for the first group of wheels 43, 44 by using a two-way pressurization process, to improve pressurization efficiency of the braking system.

In a possible implementation, that a controller generates a control instruction includes: If a brake pipeline that is in the braking system and that provides brake force for the second group of wheels 45, 46 leaks, the controller generates the control instruction, where the control instruction is used to control the second control valve 34 to be in a close state and the first control valve 32 to be in an open state.

In this embodiment of this invention, when the brake pipeline that is in the braking system and that provides brake force for the second group of wheels 45, 46 leaks, the first control valve 32 may be controlled to be in an open state, and the second control valve 34 may be controlled to be in a close state. In this case, the first hydraulic adjustment apparatus 107 may still provide brake force for the first group of wheels 43, 44 by using a two-way pressurization process, to improve pressurization efficiency of the braking system.

In a possible implementation, the brake pipeline that is in the braking system and that provides brake force for the second group of wheels 45, 46 includes a brake pipeline other than the second brake pipeline 120 in the braking system, and the method further includes: The controller drives, by using a drive apparatus 23, a piston 26 of the first hydraulic adjustment apparatus 107 to move forward along an inner wall of a hydraulic cylinder of the first hydraulic adjustment apparatus 107, to provide brake force for the first group of wheels 43, 44; and the controller drives, by using the drive apparatus 23, the piston 26 to move backward along the inner wall of the hydraulic cylinder, to provide brake force for the first group of wheels 43, 44.

In this embodiment of this invention, if the brake pipeline that is in the braking system and that provides brake force for the second group of wheels 45, 46 includes a brake pipeline other than the second brake pipeline 120 in the braking system, when the brake pipeline that is in the braking system and that provides brake force for the second group of wheels 45, 46 leaks, the driving apparatus 23 may control the piston 26 to move forward or backward along the inner wall of the hydraulic cylinder of the hydraulic adjustment apparatus 107, to provide brake force for the first group of wheels 43, 44, so as to improve pressurization efficiency of the braking system.

In a possible implementation, a third control valve 29 is disposed on the first brake pipeline 110, and the third control valve 29 is configured to control connection/disconnection of the first brake pipeline 110; and the method further includes: If the first wheels 43, 44 and/or the second wheels 45, 46 need to be depressurized, the controller controls the third control valve 29 to be in an open state.

In this embodiment of this invention, the third control valve 29 is disposed on the first brake pipeline 110, to control connection/disconnection of the first brake pipeline 110 by using the third control valve 29, so as to cooperate with the first hydraulic adjustment apparatus 107 to depressurize the braking system.

In a possible implementation, a fourth control valve 31 is disposed on the second brake pipeline 120, and the fourth control valve 31 is configured to control connection/disconnection of the second brake pipeline 120; and the method further includes: If the first wheels 43, 44 and/or the second wheels 45, 46 need to be depressurized, the controller controls the fourth control valve 31 to be in an open state.

In this embodiment of this invention, the fourth control valve 31 is disposed on the second brake pipeline 120, to control connection/disconnection of the second brake pipeline 120 by using the fourth control valve 31, so as to cooperate with the first hydraulic adjustment apparatus 107 to depressurize the braking system.

According to a non-claimed fifth aspect, a control apparatus is provided, where the control apparatus includes a processing unit and a sending unit, the sending unit is configured to send a control instruction, and the processing unit is configured to generate the control instruction, so that the control apparatus performs the control method in any one of the possible implementations of the third aspect.

Optionally, the control apparatus may be an independent controller in a vehicle, or may be a chip that has a control function in a vehicle. The processing unit may be a processor, and the sending unit may be a communication interface.

Optionally, the control apparatus may further include a storage unit, the storage unit may be a memory in a controller, and the memory may be a storage unit (for example, a register or a cache) inside a chip, or may be a storage unit (for example, a read-only memory or a random access memory) that is outside a chip and that is in a vehicle.

It should be noted that the memory in the controller is coupled to the processor. That the memory is coupled to the processor may be understood as follows: The memory is located inside the processor, or the memory is located outside the processor, and therefore is independent of the processor.

According to a non-claimed sixth aspect, a computer program product is provided, where the computer program product includes computer program code, and when the computer program code is run on a computer, the computer is enabled to perform the method in the foregoing aspects.

It should be noted that all or a part of the foregoing computer program code may be stored on a first storage medium. The first storage medium may be encapsulated together with a processor, or may be encapsulated separately from a processor. This is not specifically limited in this embodiment of this invention.

According to a non-claimed seventh aspect, a computer readable medium is provided, where the computer readable medium stores program code, and when the computer program code is run on a computer, the computer is enabled to perform the method in the foregoing aspects.

### BRIEF DESCRIPTION OF DRAWINGS

FIG. 1 is a schematic diagram of a conventional dual-loop braking system 100;
FIG. 2 is a schematic diagram of a hydraulic adjustment unit 200 according to an embodiment of this invention;
FIG. 3 is a schematic diagram of a hydraulic adjustment unit 300 according to an embodiment of this invention;
FIG. 4 is a schematic diagram of a hydraulic adjustment unit 400 according to an embodiment of this invention;
FIG. 5 is a schematic diagram of a connection manner between a liquid storage apparatus 1 and a first hydraulic adjustment apparatus 107 according to an embodiment of this invention;
FIG. 6 is a schematic diagram of a braking system according to an embodiment of this invention;
FIG. 7 is a schematic flowchart of a control method according to an embodiment of this invention;
FIG. 8 is a schematic diagram of a control apparatus according to an embodiment of this invention; and
FIG. 9 is a schematic block diagram of a controller according to another embodiment of this invention.

### DESCRIPTION OF EMBODIMENTS

The following describes technical solutions of this invention with reference to the accompanying drawings.

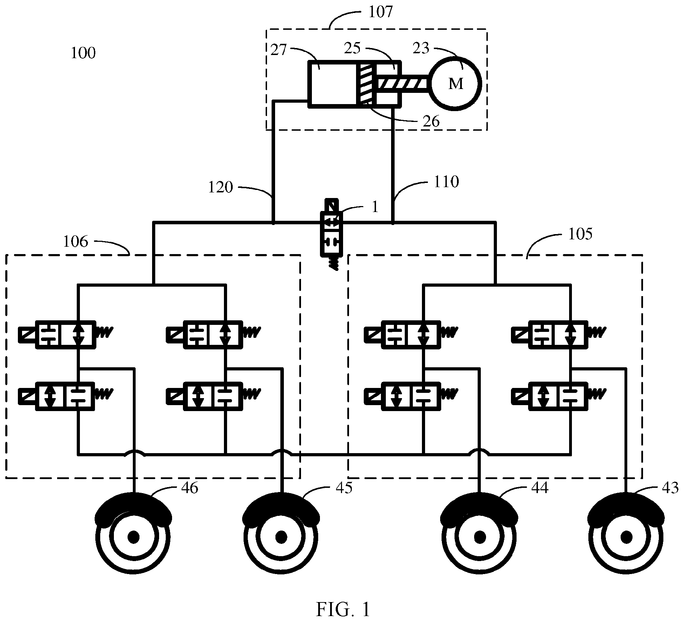

FIG. 1 is a schematic diagram of a conventional dual-loop braking system 100. The dual-loop braking system 100 includes a first hydraulic adjustment apparatus 107 having a two-way pressurization function. Specifically, a hydraulic cylinder of the first hydraulic adjustment apparatus 107 is separated by a piston 26 into a first hydraulic cavity 25 and a second hydraulic cavity 27. The first hydraulic cavity 25 is communicates with a first brake pipeline 110, and the first brake pipeline 110 is communicates with a first brake loop 105 to provide brake force for a first group of wheels 43, 44. The second hydraulic cavity 27 is communicates with a second brake pipeline 120, and the second brake pipeline 120 is communicates with a second brake loop 106 to provide brake force for a second group of wheels 45, 46.

In the dual-loop braking system 100, the first brake pipeline 110 is communicates with the second brake pipeline 120 by using a control valve 1. When the control valve 1 is in an open state, the first brake pipeline 110 communicates with the second brake pipeline 120. When the control valve 1 is in a close state, the first brake pipeline 110 is disconnected from the second brake pipeline 120.

In a forward pressurization process, a drive apparatus 23 drives the piston 26 to move leftward to compress space of the second hydraulic cavity 27, to press, by using the second brake pipeline 120, brake fluid in the second hydraulic cavity 27 into the brake loop 106 in which the second group of wheels 45, 46 is located, so as to provide brake force for the second group of wheels 45, 46. When the control valve 1 is in an open state, a part of brake fluid in the second brake pipeline 120 also flows into the first brake pipeline 110, and flows, by using the first brake pipeline 110, into the brake loop 105 in which the first group of wheels 43, 44 is located, to provide brake force for the first group of wheels 43, 44.

In a backward pressurization process, the drive apparatus 23 drives the piston 26 to move rightward to compress space of the first hydraulic cavity 25, to press, by using the first brake pipeline 110, brake fluid in the first hydraulic cavity 25 into the brake loop 105 in which the first group of wheels 43, 44 is located, so as to provide brake force for the first group of wheels. When the control valve 1 is in an open state, a part of brake fluid in the first brake pipeline 110 also flows into the second brake pipeline 120, and flows, by using the second brake pipeline 120, into the brake loop 106 in which the second group of wheels 45, 46 is located, to provide brake force for the second group of wheels 45, 46.

However, in the foregoing dual-loop braking system, after brake fluid in the brake loop 105 in which the first group of wheels is located or the brake loop 106 in which the second group of wheels is located leaks, the first hydraulic adjustment apparatus having a two-way pressurization function cannot provide, by using a two-way pressurization process, brake force for a brake loop that may normally work. This limits pressurization efficiency of the first hydraulic adjustment apparatus 107 having a two-way pressurization function for the brake loop that normally works.

It is assumed that the brake fluid in the brake loop 105 in which the first group of wheels 43, 44 is located leaks, and the brake loop in which the second group of wheels 45, 46 is located normally works. To ensure that the first hydraulic adjustment apparatus 107 may provide brake force for the second group of wheels 45, 46, the control valve 1 is controlled to be in a close state, and the drive apparatus 23 is controlled to drive the piston 26 to move leftward (that is, forward pressurization), to provide brake force for the second group of wheels 45, 46. In this case, the first hydraulic adjustment apparatus 107 cannot pressurize, by using the backward pressurization process, the brake loop in which the second group of wheels 45, 46 is located.

It is assumed that the brake fluid in the brake loop 106 in which the second group of wheels 45, 46 is located leaks, and the brake loop in which the first group of wheels 43, 44 is located normally works. To ensure that the first hydraulic adjustment apparatus 107 may provide brake force for the first group of wheels 43, 44, the control valve 1 is controlled to be in a close state, and the drive apparatus 23 is controlled to drive the piston 26 to move rightward (that is, backward pressurization), to provide brake force for the first group of wheels 43, 44. In this case, the first hydraulic adjustment apparatus 107 cannot pressurize, by using the forward pressurization process, the brake loop in which the first group of wheels 43, 44 is located.

Therefore, to avoid the foregoing problem, this invention provides a new hydraulic adjustment unit. A first control valve 32 is disposed on a third brake pipeline 130 on a first brake loop 105, to control connection/disconnection of the third brake pipeline 130. In addition, a second control valve 34 is disposed on a fourth brake pipeline 140 on a second brake loop 106, to control connection/disconnection of the fourth brake pipeline 140. The third brake pipeline 130 is a brake pipeline that is on the first brake loop 105 and that communicates with a first brake pipeline 110 and a second brake pipeline 120, and the fourth brake pipeline 140 is a brake pipeline that is on the second brake loop 106 and that communicates with the first brake pipeline 110 and the second brake pipeline 120.

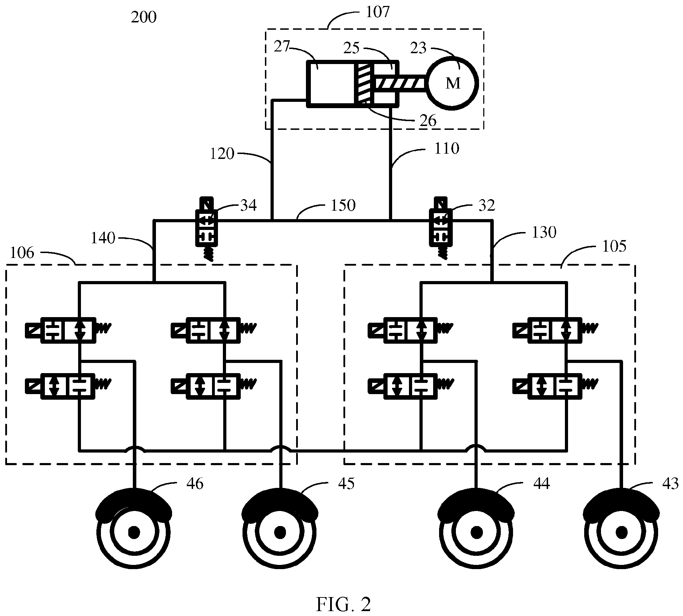

The following describes a structure of the hydraulic adjustment unit in the embodiments of this invention with reference to FIG. 2. FIG. 2 is a schematic diagram of a hydraulic adjustment unit 200 according to an embodiment of this invention. It should be understood that an element that is in a hydraulic adjustment unit 200 shown in FIG. 2 and that has a same function as an element in the braking system 100 uses a same number. For brevity, details are not described again below.

The first hydraulic adjustment unit 200 includes a first hydraulic adjustment apparatus 107 having a two-way pressurization function, a first brake pipeline 110, a second brake pipeline 120, a third brake pipeline 130, a fourth brake pipeline 140, a first control valve 32, and a second control valve 34. The first hydraulic adjustment apparatus 107 having a two-way pressurization function includes a first hydraulic cavity 25 and a second hydraulic cavity 27. The first hydraulic cavity 25 communicates with the first brake pipeline 110. The second hydraulic cavity 27 communicates with the second brake pipeline 120. The first brake pipeline 110 and the second brake pipeline 120 communicate with each other by using a fifth brake pipeline 150.

The first brake pipeline 110 communicates with the third brake pipeline 130, the third brake pipeline 130 communicates with the fifth brake pipeline 150, the second brake pipeline 120 communicates with the third brake pipeline 130 by using the fifth brake pipeline 150, the third brake pipeline 130 provides brake force for a first group of wheels 43, 44, and the first control valve 32 is disposed on the third brake pipeline 130, to control connection/disconnection of the third brake pipeline 130.

The second brake pipeline 120 communicates with the fourth brake pipeline 140, the fourth brake pipeline 140 communicates with the fifth brake pipeline 150, the first brake pipeline 110 communicates with the fourth brake pipeline 140 by using the fifth brake pipeline 150, the fourth brake pipeline 140 provides brake force for a second group of wheels 45, 46, and the second control valve 34 is disposed on the fourth brake pipeline 140, to control connection/disconnection of the fourth brake pipeline 140.

In other words, when the first control valve 32 is in a close state, brake fluid in the first brake pipeline 110 and the second brake pipeline 120 cannot flow through the third brake pipeline 130 to provide brake force for the first group of wheels 43, 44. When the second control valve 34 is in a close state, brake fluid in the first brake pipeline 110 and the second brake pipeline 120 cannot flow through the fourth brake pipeline 140 to provide brake force for the second group of wheels 45, 46.

In this embodiment of this invention, the first hydraulic cavity 25 separately communicates with the third brake pipeline 130 and the fourth brake pipeline 140 by using the first brake pipeline 110, the second hydraulic cavity 27 separately communicates with the third brake pipeline 130 and the fourth brake pipeline 140 by using the second brake pipeline 120, and the first control valve 32 and the second control valve 34 are respectively disposed on the third brake pipeline 130 and the fourth brake pipeline 140, to control connection/disconnection between the third brake pipeline 130 and the fourth brake pipeline 140, so that the first hydraulic adjustment apparatus 107 can provide brake force for the first group of wheels 43, 44 by using the third brake pipeline 130 in a two-way pressurization manner, or the first hydraulic adjustment apparatus 107 can provide brake force for the second group of wheels 45, 46 by using the fourth brake pipeline 140 in a two-way pressurization manner.

It is assumed that a first brake loop 105 leaks and a second brake loop 106 may normally work. The first control valve 32 may be controlled to be in a close state, and the second control valve 34 may be controlled to be in an open state. In a forward pressurization process, brake fluid in the second hydraulic cavity 27 flows into the fourth brake pipeline 140 by using the second brake pipeline 120, and provides brake force for the second group of wheels 45, 46 by using the fourth brake pipeline 140. In a backward pressurization process, brake fluid in the first hydraulic cavity 25 flows into the fourth brake pipeline 140 by using the first brake pipeline 110, and provides brake force for the second group of wheels 45, 46 by using the fourth brake pipeline 140.

It is assumed that a second brake loop 106 leaks and a first brake loop 105 may normally work. The second control valve 34 may be controlled to be in a close state, and the first control valve 32 may be controlled to be in an open state. In a forward pressurization process, brake fluid in the second hydraulic cavity 27 flows into the third brake pipeline 130 by using the second brake pipeline 120, and provides brake force for the first group of wheels 43, 44 by using the third brake pipeline 130. In a backward pressurization process, brake fluid in the first hydraulic cavity 25 flows into the third brake pipeline 130 by using the first brake pipeline 110, and provides brake force for the first group of wheels 43, 44 by using the third brake pipeline 130.

Optionally, the first group of wheels 43, 44 may include a right front wheel and a left front wheel of a vehicle, and the second group of wheels 45, 46 may include a right rear wheel and a left rear wheel of the vehicle. In this case, the hydraulic adjustment unit may be understood as having H-shaped arrangement in the vehicle. Alternatively, the first group of wheels 43, 44 may include a right front wheel and a left rear wheel of a vehicle, and the second group of wheels 45, 46 may include a right rear wheel and a left front wheel of the vehicle. In this case, the hydraulic adjustment unit may be understood as having X-shaped arrangement in the vehicle.

It should be understood that FIG. 2 shows only a possible structure of the first hydraulic adjustment apparatus having a two-way pressurization function. In this embodiment of this invention, a first hydraulic adjustment apparatus having a two-way pressurization function and another structure may be used. This is not limited in this embodiment of this invention.

In a pressurization process of the first hydraulic adjustment apparatus 107, regardless of whether the first hydraulic cavity 25 or the second hydraulic cavity 27 provides brake force, to reduce resistance existing when a piston moves, a hydraulic cavity that provides brake force needs to press a part of braking fluid into the other hydraulic cavity, to reduce a pressure difference between the two hydraulic cavities. Therefore, because the fifth brake pipeline 150 communicates with the first brake pipeline 110 and the second brake pipeline 120, the pressure difference between the two hydraulic cavities may be further reduced.

Certainly, if the resistance existing when the piston moves does not need to be reduced, the first brake pipeline 110 and the second brake pipeline 120 may be two independent brake pipelines. With reference to FIG. 2, the following specifically describes a solution of reducing the pressure difference between the first hydraulic cavity 25 and the second hydraulic cavity 27 in this embodiment of this invention.

Referring to FIG. 2, in the forward pressurization process, a drive apparatus 23 drives the piston 26 to move leftward to compress a volume of the second hydraulic cavity 27 and increase a volume of the first hydraulic cavity 25. In this case, brake fluid in the second hydraulic cavity 27 is pressed into the second brake pipeline 120. A part of brake fluid in the second brake pipeline 120 flows into the fourth brake pipeline 140, to provide brake force for the second group of wheels 45, 46. Another part of brake fluid in the second brake pipeline 120 flows into the fifth brake pipeline 150. Correspondingly, a part of brake fluid in the fifth brake pipeline 150 flows into the first hydraulic cavity 25 by using the first brake pipeline 110, and another part of brake fluid in the fifth brake pipeline 150 flows into the third brake pipeline 130, to provide brake force for the first group of wheels 43, 44.

In the backward pressurization process, a drive apparatus 23 drives the piston 26 to move rightward to compress a volume of the first hydraulic cavity 25 and increase a volume of the second hydraulic cavity 27. In this case, brake fluid in the first hydraulic cavity 25 is pressed into the first brake pipeline 110. A part of brake fluid in the first brake pipeline 110 flows into the third brake pipeline 130, to provide brake force for the first group of wheels 43, 44. Another part of brake fluid in the first brake pipeline 110 flows into the fifth brake pipeline 150. Correspondingly, a part of brake fluid in the fifth brake pipeline 150 flows into the second hydraulic cavity 27 by using the second brake pipeline 120, and another part of brake fluid in the fifth brake pipeline 150 flows into the fourth brake pipeline 140, to provide brake force for the second group of wheels 45, 46.

It should be noted that, when leakage occurs in the first brake loop 105 or the second brake loop 106, a manner of reducing the pressure difference between the first hydraulic cavity 25 and the second hydraulic cavity 27 is the same as the principle described above. For brevity, details are not described again below.

As described above, regardless of whether the first hydraulic cavity 25 or the second hydraulic cavity 27 provides brake force, the braking fluid in the hydraulic cavity cannot totally flow into the first group of wheels and/or the second group of wheels, and there is always a part of braking fluid used to compensate for the pressure difference between the two hydraulic cavities. In this case, efficiency of providing brake force by the first hydraulic adjustment apparatus 107 is reduced. Therefore, to improve pressurization efficiency of the first hydraulic adjustment apparatus 107, a third control valve 29 may be disposed on the first brake pipeline to control connection/disconnection of the first brake pipeline 110, and/or a fourth control valve 31 may be disposed on the second brake pipeline 120 to control connection/disconnection of the second brake pipeline 120.

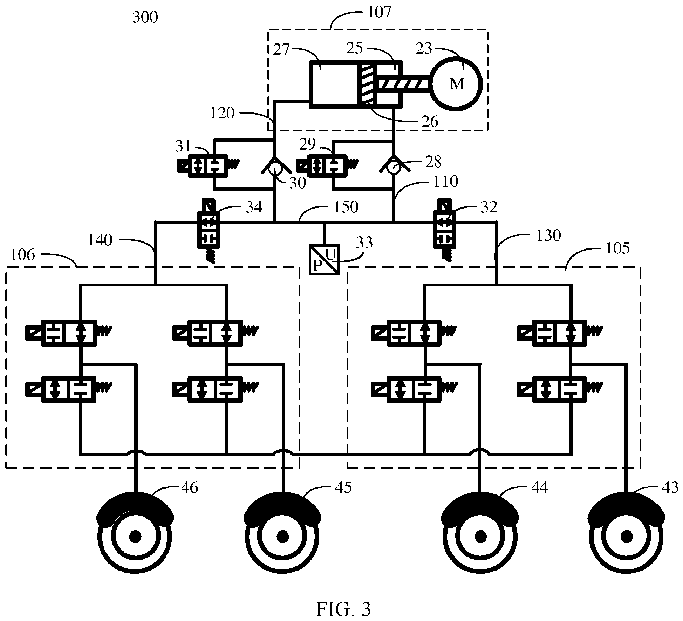

Generally, to prevent the first brake pipeline 110 from being disconnected because the third control valve 29 fails, a first one-way valve 28 may be connected in parallel with two ends of the third control valve 29. The first one-way valve 28 allows brake fluid in the first hydraulic cavity 25 to flow into the fifth brake pipeline 150, and blocks brake fluid in the fifth brake pipeline 150 from flowing into the first hydraulic cavity 25. Similarly, to prevent the second brake pipeline 120 from being disconnected because the fourth control valve 31 fails, a second one-way valve 30 may be connected in parallel with two ends of the fourth control valve 31. The second one-way valve 30 allows brake fluid in the second hydraulic cavity 27 to flow into the fifth brake pipeline 150, and blocks brake fluid in the fifth brake pipeline 150 from flowing into the second hydraulic cavity 27. With reference to FIG. 3, the following describes a pressurization solution of a hydraulic adjustment unit 300 in this embodiment of this invention when the brake fluid in the hydraulic cavity is not used to compensate for the pressure difference between the two hydraulic cavities.

FIG. 3 is a schematic diagram of a hydraulic adjustment unit 300 according to an embodiment of this invention. It should be understood that an element that is in the hydraulic adjustment unit 300 and that has a same function as an element in the hydraulic adjustment unit 200 uses a same number. For brevity, details are not described again below.

In the forward pressurization process, the fourth control valve 31 is controlled to be in a close state, and the third control valve 29 is controlled to be in a close state. In this way, the drive apparatus 23 drives the piston 26 to move leftward to compress the volume of the second hydraulic cavity 27 and increase the volume of the first hydraulic cavity 25. In this case, brake fluid in the second hydraulic cavity 27 is pressed into the second brake pipeline 120 by using the second one-way valve 30. A part of brake fluid in the second brake pipeline 120 flows into the fourth brake pipeline 140, to provide brake force for the second group of wheels 45, 46. Another part of brake fluid in the second brake pipeline 120 flows into the fifth brake pipeline 150. Correspondingly, because the third control valve 29 is in a close state, the brake fluid in the fifth brake pipeline 150 cannot flow into the first hydraulic cavity 25 by using the first brake pipeline 110. Therefore, the brake fluid in the fifth brake pipeline 150 flows into the third brake pipeline 130, to provide brake force for the first group of wheels 43, 44.

In the backward pressurization process, the fourth control valve 31 is controlled to be in a close state, and the third control valve 29 is controlled to be in a close state. In this way, the drive apparatus 23 drives the piston 26 to move rightward to compress the volume of the first hydraulic cavity 25 and increase the volume of the second hydraulic cavity 27. In this case, brake fluid in the first hydraulic cavity 25 is pressed into the first brake pipeline 110 by using the first one-way valve 28. A part of brake fluid in the first brake pipeline 110 flows into the third brake pipeline 130, to provide brake force for the first group of wheels 43, 44. Another part of brake fluid in the first brake pipeline 110 flows into the fifth brake pipeline 150. Correspondingly, because the fourth control valve 31 is in a close state, the brake fluid in the fifth brake pipeline 150 cannot flow into the second hydraulic cavity 27 by using the second brake pipeline 120. Therefore, all the brake fluid in the fifth brake pipeline 150 may flow into the fourth brake pipeline 140, to provide brake force for the second group of wheels 45, 46.

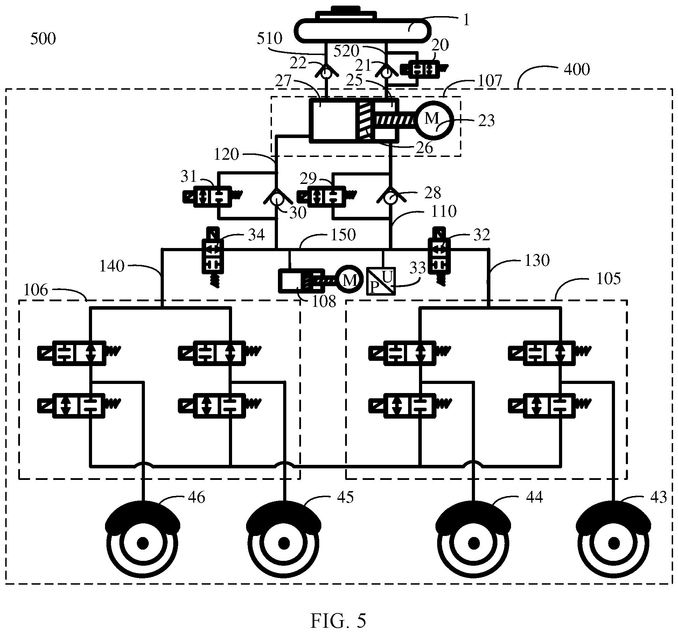

It should be noted that the brake fluid required for compensating for the pressure difference between brake fluid in the two hydraulic cavities may be further provided by a liquid storage apparatus 1 in the braking system. For a specific connection manner between the liquid storage apparatus 1 and the hydraulic adjustment apparatus 107, refer to the braking system shown in FIG. 5 below.

Generally, to improve safety of the braking system, a controller needs to obtain pressure of the brake fluid in the first brake pipeline 110 and the second brake pipeline 120, to monitor whether the first hydraulic adjustment apparatus 107 can normally perform pressurization. Therefore, a pressure sensor needs to be disposed on each of the first brake pipeline 110 and the second brake pipeline 120. However, in the method for disposing a pressure sensor, costs of the hydraulic adjustment unit 300 are increased.

Therefore, to reduce costs of the hydraulic adjustment unit 300, a pressure sensor 33 (referring to FIG. 3) may be disposed on the fifth brake pipeline 150 to detect pressure of the brake fluid in the fifth brake pipeline 150. The first brake pipeline 110 and the second brake pipeline 120 communicate with each other by using the fifth brake pipeline 150. In this case, the pressure of the brake fluid in the fifth brake pipeline 150 is the same as the pressure of the brake fluid in the first brake pipeline 110 and the second brake pipeline 120. Therefore, the pressure sensor 33 may monitor the pressure of the brake fluid in both the first brake pipeline 110 and the second brake pipeline 120.

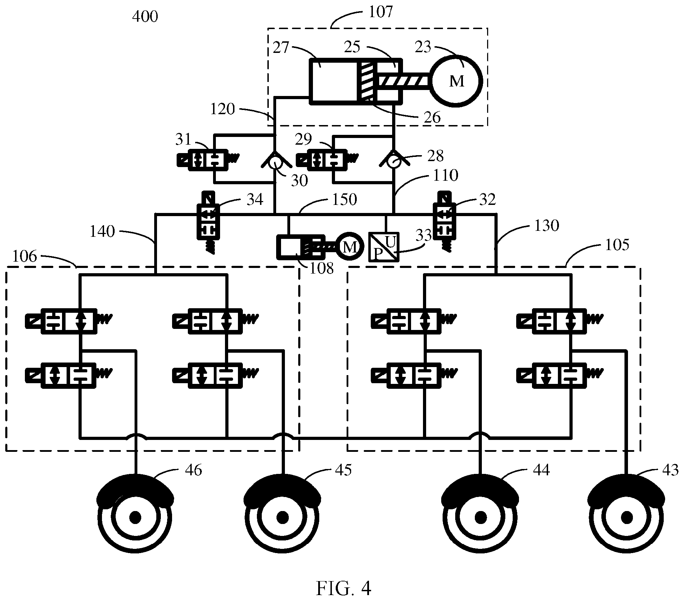

To improve redundancy performance of the hydraulic adjustment unit, a second hydraulic adjustment apparatus 108 (referring to FIG. 4) may be further disposed in the hydraulic adjustment unit. The second hydraulic adjustment apparatus 108 separately communicates with the third brake pipeline 130 and the fourth brake pipeline 140 by using the fifth brake pipeline 150, to provide brake force for the first group of wheels 43, 44 and the second group of wheels 45, 46.

The foregoing describes the connection manner between the first hydraulic adjustment apparatus 107 and the two brake loops 105 and 106 in the hydraulic adjustment unit in this embodiment of this invention with reference to FIG. 2 to FIG. 4. The following describes a connection manner between the first hydraulic adjustment apparatus 107 and the liquid storage apparatus 1 with reference to FIG. 5. It should be understood that any of the foregoing hydraulic adjustment units may be communicates with the liquid storage apparatus 1 based on FIG. 5. Manners in which brake fluid flows between the hydraulic adjustment units and the liquid storage apparatus 1 are similar. Therefore, for brevity, a hydraulic adjustment unit 400 is used as an example for description below.

FIG. 5 is a schematic diagram of a connection manner between a liquid storage apparatus 1 and a first hydraulic adjustment apparatus 107 according to an embodiment of this invention. As shown in FIG. 5, in a hydraulic adjustment unit 500, a one-way valve 22 is disposed on a liquid inlet pipeline 510. The one-way valve 22 allows brake fluid in the liquid inlet pipeline to flow from the liquid storage apparatus 1 to the second hydraulic cavity 27. A control valve 20 is disposed on a second liquid inlet pipeline 520 to control connection/disconnection of the brake pipeline 520, and a one-way valve 21 is connected in parallel with two ends of the control valve 20. The one-way valve 21 allows brake fluid to flow from the liquid storage apparatus 1 to the first hydraulic cavity 25, and blocks brake fluid from flowing from the first hydraulic cavity 25 to the liquid storage apparatus 1.

The first hydraulic cavity 25 is communicates with the liquid storage apparatus 1 by using the second liquid inlet pipeline 520. In the forward pressurization process, the control valve 20 may be controlled to be in a close state, so that the brake fluid in the liquid storage apparatus 1 flows into the first hydraulic cavity 25 by using the one-way valve 21, to reduce the pressure difference between the brake fluid in the first hydraulic cavity 25 and the second hydraulic cavity 27.

In the backward pressurization process, the control valve 20 may be controlled to be in a close state, so that the brake fluid in the liquid storage apparatus 1 flows into the first hydraulic cavity 25 by using the one-way valve 21, to press the brake fluid into a brake wheel cylinder in the braking system by using the first hydraulic cavity 25.

Optionally, if the control valve 20 is in an open state, the first hydraulic adjustment apparatus 107 may depressurize the wheels 43, 44, 45, and 46. For example, the third control valve 29 and the fourth control valve 31 are controlled to be in an open state, and the drive apparatus 23 drives the piston 26 to move leftward to compress the volume of the second hydraulic cavity 27 and increase the volume of the first hydraulic cavity 25. In this case, because pressure in the first hydraulic cavity 25 is low, brake liquid applied on the wheels 43, 44, 45, and 46 flows into the first hydraulic cavity 25, and flows out of the first hydraulic cavity 25 by using the control valve 20.

It should be noted that, the first hydraulic adjustment apparatus 107 and the liquid storage apparatus 1 may be connected in another manner. For example, the control valve 20 may be deleted on the basis of the hydraulic adjustment unit 500. For another example, the one-way valve 21 may be deleted on the basis of the hydraulic adjustment unit 500. This is not specifically limited in this embodiment of this invention.

The foregoing describes the hydraulic adjustment unit in this embodiment of this invention with reference to FIG. 2 to FIG. 5. The following describes a braking system that includes the foregoing hydraulic adjustment unit. It should be understood that any of the foregoing hydraulic adjustment units may be separately applied to the braking system. Working manners of the hydraulic adjustment units in the braking system are similar. Therefore, for brevity, a braking system that includes the hydraulic adjustment unit 500 is as an example for description below.

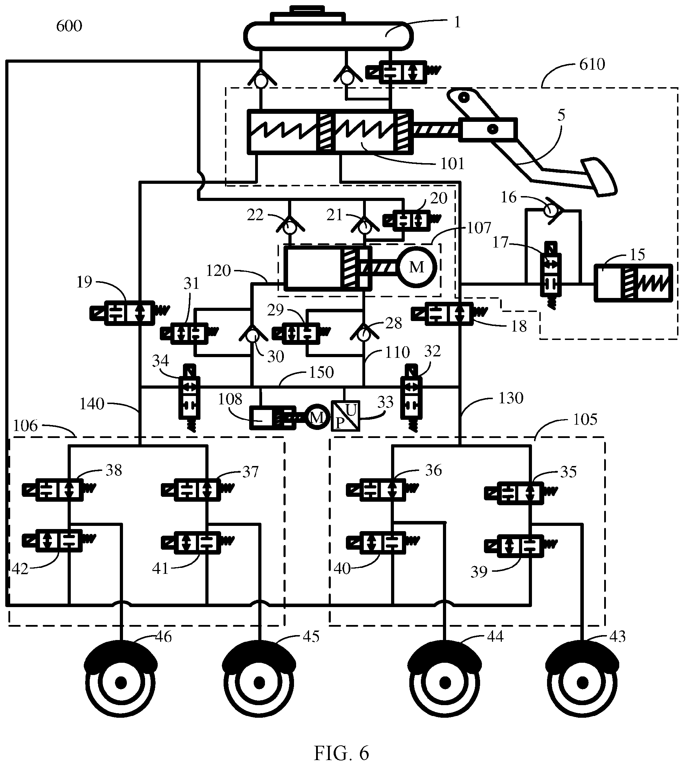

FIG. 6 is a schematic diagram of a braking system according to an embodiment of this invention. A braking system 600 shown in FIG. 6 may support three braking modes: a manual braking mode, a brake-by-wire mode, and a self-driving mode. The first hydraulic adjustment apparatus 107 may participate in the brake-by-wire mode and the self-driving mode. A master cylinder pressurization adjustment unit 610 may participate in the manual braking mode and the brake-by-wire mode. A driver steps on a brake pedal 5 to enable, by using a brake pipeline in which a control valve 17 is located, brake fluid in a brake master cylinder 101 to flow into a pedal feel simulator 15.

In the manual braking mode, liquid inlet valves 35, 36, 37, and 38, a control valve 18, and a control valve 19 are in an open state, and liquid outlet valves 39, 40, 41, and 42 and the control valve 17 are in a close state. The brake fluid provides brake force for the wheels 43, 44, 45, and 46 by using a brake pipeline in which the control valve 18 is located and a brake pipeline in which the control valve 19 is located.

In the brake-by-wire mode, liquid outlet valves 39, 40, 41, and 42, a control valve 19, and a control valve 18 are in a close state, and liquid inlet valves 35, 36, 37, and 38 and the control valve 17 are in an open state. Correspondingly, the first hydraulic adjustment apparatus 107 provides brake force for the wheels 43, 44, 45, and 46 based on a pedal stroke detected by a pedal stroke sensor.

In the self-driving mode, liquid outlet valves 39, 40, 41, and 42, the control valve 17, a control valve 19, and a control valve 18 are in a close state, and liquid inlet valves 35, 36, 37, and 38 are in an open state. The first hydraulic adjustment apparatus 107 provides brake force for the wheels 43, 44, 45, and 46 based on an instruction of the controller.

In the foregoing three modes, a working manner of the braking system in the manual braking mode is similar to a working manner of a conventional braking system. Working manners of the first hydraulic adjustment apparatus 107 in the brake-by-wire mode and the self-driving mode have been described when the working manner of the hydraulic adjustment unit is described above. For brevity, the following mainly describes working manners that are of the braking system and that exist when the first brake loop 105 leaks, the second brake loop 106 leaks, and the first hydraulic adjustment apparatus 107 is faulty in a braking mode in which the first hydraulic adjustment apparatus 107 participates. For the foregoing three working modes, details are not described.

It is assumed that the first brake loop 105 leaks and the second brake loop 106 may normally work, the control valve 18, the control valve 19, the first control valve 32, and the liquid outlet valves 39, 40, 41, and 42 are in a close state, and the second control valve 34, the third control valve 29, the fourth control valve 31, and the liquid inlet valves 37 and 38 are in an open state. In this case, in the forward pressurization process, brake fluid in the second hydraulic cavity 27 flows into the fourth brake pipeline 140 by using the second brake pipeline 120, and provides brake force for the second group of wheels 45, 46 by using the fourth brake pipeline 140. In the backward pressurization process, brake fluid in the first hydraulic cavity 25 flows into the fourth brake pipeline 140 by using the first brake pipeline 110, and provides brake force for the second group of wheels 45, 46 by using the fourth brake pipeline 140.

It should be noted that, in the foregoing case, an open/close state of the control valve 17 may be determined based on a working mode of the braking system. For example, in the brake-by-wire mode, the control valve 17 is in an open state; or in the self-driving mode, the control valve 17 is in a close state.

It should be further noted that, in the foregoing case, an open/close state of the liquid inlet valves 35 and 36 does not affect working of the braking system. This is not limited in this embodiment of this invention.

It is assumed that the second brake loop 106 leaks and the first brake loop 105 may normally work, the control valve 18, the control valve 19, the second control valve 34, and the liquid outlet valves 39, 40, 41, and 42 are in a close state, and the second control valve 34, the third control valve 29, the fourth control valve 31, and the liquid inlet valves 35 and 36 are in an open state. In this case, in the forward pressurization process, brake fluid in the second hydraulic cavity 27 flows into the third brake pipeline 130 by using the second brake pipeline 120, and provides brake force for the first group of wheels 43, 44 by using the third brake pipeline 130. In the backward pressurization process, brake fluid in the first hydraulic cavity 25 flows into the third brake pipeline 130 by using the first brake pipeline 110, and provides brake force for the first group of wheels 43, 44 by using the third brake pipeline 130.

It should be noted that, in the foregoing case, an open/close state of the control valve 17 may be determined based on a working mode of the braking system. For example, in the brake-by-wire mode, the control valve 17 is in an open state; or in the self-driving mode, the control valve 17 is in a close state.

It should be further noted that, in the foregoing case, an open/close state of the liquid inlet valves 37 and 38 does not affect working of the braking system. This is not limited in this embodiment of this invention.

It is assumed that the first hydraulic adjustment apparatus 107 is faulty, the control valve 18, the control valve 19, the liquid outlet valves 39, 40, 41, and 42, the third control valve 29, and the fourth control valve 31 are in a close state, and the first control valve 32, the second control valve 34, and the liquid inlet valves 35, 36, 37, and 38 are in an open state. In this case, in the pressurization process, brake fluid in the second hydraulic adjustment apparatus 108 flows into the third brake pipeline 130 and the fourth brake pipeline 140 by using the fifth brake pipeline 150, provides brake force for the first group of wheels 43, 44 by using the third brake pipeline 130, and provides brake force for the second group of wheels 45, 46 by using the fourth brake pipeline 140.

Optionally, the fault of the first hydraulic adjustment apparatus may be determined by the controller based on feedback of the pressure sensor 33. For example, in a scenario in which the first hydraulic adjustment apparatus 107 provides brake force, if pressure that is of the brake fluid in the fifth brake pipeline and that is detected by the pressure sensor 33 is less than a preset pressure value, the controller may determine that the first hydraulic adjustment apparatus 107 is faulty. For another example, in a scenario in which the first hydraulic adjustment apparatus 107 provides brake force, if a pressurization rate that is of the fifth brake pipeline and that is detected by the pressure sensor 33 is less than a preset pressurization rate, the controller may determine that the first hydraulic adjustment apparatus 107 is faulty.

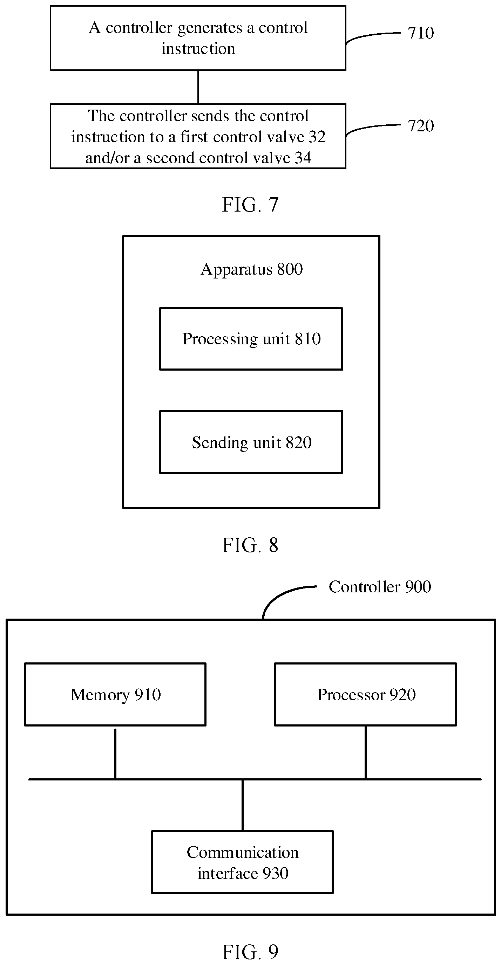

The foregoing describes the hydraulic adjustment unit and the braking system in this embodiment of this invention with reference to FIG. 2 to FIG. 6. With reference to FIG. 7, the following describes a control method provided in an embodiment of this invention. It should be understood that a solution provided in this embodiment of this invention may be used in combination with any one of the foregoing hydraulic adjustment units, or the control method in this embodiment of this invention may be applied to a braking system that includes any one of the foregoing hydraulic adjustment units.

FIG. 7 is a schematic flowchart of a control method according to an embodiment of this invention. The method shown in FIG. 7 includes step 710 and step 720.

710. A controller generates a control instruction, where the control instruction is used to control an open/close state of the first control valve 32 and/or the second control valve 34.

720. The controller sends the control instruction to the first control valve 32 and/or the second control valve 34.

Optionally, in an embodiment, the foregoing step 710 includes: The controller generates the control instruction, where the control instruction is used to control the first control valve 32 to be in a close state and the second control valve 34 to be in an open state, so that the first hydraulic cavity 25 presses brake fluid into the fourth brake pipeline 140 by using the first brake pipeline 110 and the fifth brake pipeline 150 that communicate with each other, to provide brake force for the second group of wheels 45, 46, and the second hydraulic cavity 27 provides brake force for the second group of wheels 45, 46 by using the second brake pipeline 120 and the fourth brake pipeline 140 that communicate with each other.

Optionally, in an embodiment, the foregoing step 710 includes: If a brake pipeline that is in the braking system and that provides brake force for the first group of wheels 43, 44 leaks, the controller generates the control instruction, where the control instruction is used to control the first control valve 32 to be in a close state and the second control valve 34 to be in an open state.

Optionally, in an embodiment, the brake pipeline that is in the braking system and that provides brake force for the first group of wheels 43, 44 includes a brake pipeline other than the first brake pipeline 110 in the braking system, and the method further includes: The controller drives, by using a drive apparatus 23, a piston 26 of the hydraulic adjustment apparatus 107 to move forward along an inner wall of a hydraulic cylinder of the hydraulic adjustment apparatus 107, to provide brake force for the second group of wheels 45, 46; and the controller drives, by using the drive apparatus 23, the piston 26 to move backward along the inner wall of the hydraulic cylinder, to provide brake force for the second group of wheels 45, 46.

Optionally, in an embodiment, the foregoing step 710 includes: The controller generates the control instruction, where the control instruction is used to control the second control valve 34 to be in a close state and the first control valve 32 to be in an open state, so that the second hydraulic cavity 27 presses brake fluid into the third brake pipeline 130 by using the second brake pipeline 120 and the fifth brake pipeline 150 that communicate with each other, to provide brake force for the first group of wheels 43, 44, and the first hydraulic cavity 25 provides brake force for the first group of wheels 43, 44 by using the first brake pipeline 110 and the third brake pipeline 130 that communicate with each other.

Optionally, in an embodiment, the foregoing step 710 includes: If a brake pipeline that is in the braking system and that provides brake force for the second group of wheels 45, 46 leaks, the controller generates the control instruction, where the control instruction is used to control the second control valve 34 to be in a close state and the first control valve 32 to be in an open state.

Optionally, in an embodiment, the brake pipeline that is in the braking system and that provides brake force for the second group of wheels 45, 46 includes a brake pipeline other than the second brake pipeline 120 in the braking system, and the method further includes: The controller drives, by using a drive apparatus 23, a piston 26 of the first hydraulic adjustment apparatus 107 to move forward along an inner wall of a hydraulic cylinder of the first hydraulic adjustment apparatus 107, to provide brake force for the first group of wheels 43, 44; and the controller drives, by using the drive apparatus 23, the piston 26 to move backward along the inner wall of the hydraulic cylinder, to provide brake force for the first group of wheels 43, 44.

Optionally, in an embodiment, a third control valve 29 is disposed on the first brake pipeline 110, and the third control valve 29 is configured to control connection/disconnection of the first brake pipeline 110; and the method further includes: If the first wheels 43, 44 and/or the second wheels 45, 46 need to be depressurized, the controller controls the third control valve 29 to be in an open state.

Optionally, in an embodiment, a fourth control valve 31 is disposed on the second brake pipeline 120, and the fourth control valve 31 is configured to control connection/disconnection of the second brake pipeline 120; and the method further includes: If the first wheels 43, 44 and/or the second wheels 45, 46 need to be depressurized, the controller controls the fourth control valve 31 to be in an open state.

The foregoing describes the method in this embodiment of this invention with reference to FIG. 7. The following describes a control apparatus for performing the foregoing control method in this invention with reference to FIG. 8 and FIG. 9. It should be noted that the apparatus in this embodiment of this invention may be applied to any one of the hydraulic adjustment units or braking systems described above to implement one or more steps of the control method described above. For brevity, details are not described herein again.

FIG. 8 is a schematic diagram of a control apparatus according to an embodiment of this invention. An apparatus 800 shown in FIG. 8 includes a processing unit 810 and a sending unit 820.

The processing unit 810 is configured to generate a control instruction, where the control instruction is used to control an open/close state of the first control valve 32 and/or the second control valve 34.

The sending unit 820 is configured to send the control instruction to the first control valve 32 and/or the second control valve 34.

Optionally, in an embodiment, the processing unit 810 is further configured to generate the control instruction, where the control instruction is used to control the first control valve 32 to be in a close state and the second control valve 34 to be in an open state, so that the first hydraulic cavity 25 presses brake fluid into the fourth brake pipeline 140 by using the first brake pipeline 110 and the fifth brake pipeline 150 that communicate with each other, to provide brake force for the second group of wheels 45, 46, and the second hydraulic cavity 27 provides brake force for the second group of wheels 45, 46 by using the second brake pipeline 120 and the fourth brake pipeline 140 that communicate with each other.

Optionally, in an embodiment, if a brake pipeline that is in the braking system and that provides brake force for the first group of wheels 43, 44 leaks, the processing unit 810 is further configured to generate the control instruction, where the control instruction is used to control the first control valve 32 to be in a close state and the second control valve 34 to be in an open state.

Optionally, in an embodiment, the brake pipeline that is in the braking system and that provides brake force for the first group of wheels 43, 44 includes a brake pipeline other than the first brake pipeline 110 in the braking system; the processing unit 810 is further configured to drive, by using a drive apparatus 23, a piston 26 of the hydraulic adjustment apparatus 107 to move forward along an inner wall of a hydraulic cylinder of the first hydraulic adjustment apparatus 107, to provide brake force for the second group of wheels 45, 46; and the processing unit 810 is further configured to drive, by using the drive apparatus 23, the piston 26 to move backward along the inner wall of the hydraulic cylinder, to provide brake force for the second group of wheels 45, 46.

Optionally, in an embodiment, the processing unit 810 is further configured to generate the control instruction, where the control instruction is used to control the second control valve 34 to be in a close state and the first control valve 32 to be in an open state, so that the second hydraulic cavity 27 presses brake fluid into the third brake pipeline 130 by using the second brake pipeline 120 and the fifth brake pipeline 150 that communicate with each other, to provide brake force for the first group of wheels 43, 44, and the first hydraulic cavity 25 provides brake force for the first group of wheels 43, 44 by using the first brake pipeline 110 and the third brake pipeline 130 that communicate with each other.

Optionally, in an embodiment, if a brake pipeline that is in the braking system and that provides brake force for the second group of wheels 45, 46 leaks, the processing unit 810 is further configured to generate, the control instruction, where the control instruction is used to control the second control valve 34 to be in a close state and the first control valve 32 to be in an open state.

Optionally, in an embodiment, the brake pipeline that is in the braking system and that provides brake force for the second group of wheels 45, 46 includes a brake pipeline other than the second brake pipeline 120 in the braking system; the processing unit 810 is further configured to drive, by using a drive apparatus 23, a piston 26 of the hydraulic adjustment apparatus 107 to move forward along an inner wall of a hydraulic cylinder of the hydraulic adjustment apparatus 107, to provide brake force for the first group of wheels 43, 44; and the processing unit 810 is further configured to drive, by using the drive apparatus 23, the piston 26 to move backward along the inner wall of the hydraulic cylinder, to provide brake force for the first group of wheels 43, 44.

Optionally, in an embodiment, a third control valve 29 is disposed on the first brake pipeline 110, and the third control valve 29 is configured to control connection/disconnection of the first brake pipeline 110; and if the first wheels 43, 44 and/or the second wheels 45, 46 need to be depressurized, the processing unit 810 is further configured to control the third control valve 29 to be in an open state.

Optionally, in an embodiment, a fourth control valve 31 is disposed on the second brake pipeline 120, and the fourth control valve 31 is configured to control connection/disconnection of the second brake pipeline 120; and if the first wheels 43, 44 and/or the second wheels 45, 46 need to be depressurized, the processing unit 810 is further configured to control the fourth control valve 31 to be in an open state.

In an optional embodiment, the processing unit 810 may be a processor 920, the sending unit 820 may be a communication interface 930, and a specific structure of the controller is shown in FIG. 9.

FIG. 9 is a schematic block diagram of a controller according to another embodiment of this invention. A controller 900 shown in FIG. 9 may include a memory 910, a processor 920, and a communication interface 930. The memory 910, the processor 920, and the communication interface 930 are communicates with each other by using an internal connection path. The memory 910 is configured to store instructions. The processor 920 is configured to execute the instructions stored in the memory 910, to control the communication interface 930 to receive/send information. Optionally, the memory 910 may be coupled to the processor 920 by using an interface, or may be integrated with the processor 920.

It should be noted that the foregoing communication interface 930 uses an apparatus such as an input/output interface (input/output interface), to implement communication between the controller 900 and another device or a communication network.

In an implementation process, the steps in the foregoing method may be implemented by using a hardware integrated logical circuit in the processor 920, or by using instructions in a form of software. The method disclosed with reference to embodiments of this invention may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 910, and a processor 920 reads information in the memory 910 and completes the steps in the foregoing methods in combination with hardware of the processor. To avoid repetition, details are not described herein again.

It should be understood that, the processor in embodiments of this invention may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should also be understood that in embodiments of this invention, the memory may include a read-only memory and a random access memory, and provide instructions and data for the processor. A part of the processor may further include a non-volatile random access memory. For example, the processor may further store information of a device type.

It should be noted that the "liquid outlet pipeline" and the "liquid inlet pipeline" in this invention may correspond to different brake pipelines, or may correspond to a same brake pipeline. The "liquid outlet pipeline" and the "liquid inlet pipeline" are differentiated only based on a function of a brake pipeline in the braking system. For example, when the "liquid outlet pipeline" and the "liquid inlet pipeline" correspond to a same brake pipeline 1, it may be understood that, in a process of depressurizing the wheel of the vehicle, the brake pipeline 1 in the braking system is configured to transport brake fluid in the wheel to the liquid storage apparatus. In this case, the brake pipeline 1 may be referred to as a "liquid outlet pipeline". In a process of pressurizing the wheel of the vehicle, the brake pipeline 1 is configured to provide brake fluid for the wheel of the vehicle, to provide brake force for the wheel of the vehicle. In this case, the brake pipeline 1 may be referred to as a "liquid inlet pipeline".

In addition, the "liquid inlet valve", the "liquid outlet valve", and the "equalizing valve" in this invention are differentiated only based on a function of a control valve in the braking system. A control valve configured to control connection or disconnection of a liquid inlet pipeline may be referred to as a "liquid inlet valve" or a "pressurization valve". A control valve configured to control connection or disconnection of a liquid return pipeline may be referred to as a "liquid outlet valve" or a "depressurization valve". A control valve configured to isolate two levels of braking subsystem may be referred to as an "isolation valve". The foregoing control valve may be a valve frequently used in an existing braking system, for example, a solenoid valve. This is not specifically limited in the embodiments of this invention.

In addition, after the control valve is communicates with the brake pipeline, a connection port between the control valve and the brake pipeline may be represented by using a first end and a second end. This invention imposes no limitation on a flow direction of brake fluid between the first end and the second end. For example, when the control valve is in an open state, the brake fluid may flow from the first end of the control valve to the second end of the control valve; or when the control valve is in a close state, the brake fluid may flow from the second end of the control valve to the first end of the control valve.

In addition, the "first brake pipeline 110", the "second brake pipeline 120", the "third brake pipeline 130", the "fourth brake pipeline 140", and another brake pipeline in this invention may be understood as one or more segments of brake pipelines that implement a function. For example, the first brake pipeline 110 may include a plurality of segments of brake pipelines configured to connect the first hydraulic cavity 25 and the first control valve 32.

In addition, in this invention, when architectures such as the braking system and the vehicle are described with reference to the accompanying drawings, two working state (close or open) that may be implemented by each control valve are schematically shown in the accompanying drawings, and a current working state of the control valve is not limited to that in the figure.

In addition, in this invention, when architectures such as the hydraulic adjustment unit, the braking system, and the vehicle are described with reference to the accompanying drawings, parts that have a same function in the accompanying drawings corresponding to the embodiments use a same number. For brevity, functions of the parts are not described in each embodiment. For details, refer to descriptions of the functions of the parts in this specification.

In addition, the hydraulic adjustment unit in this invention may be a unit that is in the braking system and that is configured to adjust pressure of brake fluid, and includes one or more of segments of the foregoing brake pipelines, and elements such as a control valve and a one-way valve on the brake pipeline. Optionally, the foregoing hydraulic adjustment unit may further include elements such as a hydraulic cylinder, a piston, and a push rod in the hydraulic adjustment apparatus. After the foregoing hydraulic adjustment unit is mounted in the braking system, the braking system may further include one or more elements in a brake wheel cylinder, a liquid storage apparatus, and a brake pedal.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. n.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this invention, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this invention may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this invention essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

## Claims

1. A hydraulic adjustment unit, comprising:
a first hydraulic adjustment apparatus (107) , wherein the first hydraulic adjustment apparatus (107) comprises a first hydraulic cavity (25) and a second hydraulic cavity (27), the first hydraulic cavity (25) communicates with a first brake pipeline (110), the second hydraulic cavity (27) communicates with a second brake pipeline (120), and the first brake pipeline (110) and the second brake pipeline (120) communicate with each other by using a fifth brake pipeline (150);
the first brake pipeline (110) communicates with a third brake pipeline (130), the third brake pipeline (130) communicates with the fifth brake pipeline (150), the second brake pipeline (120) communicates with the third brake pipeline (130) by using the fifth brake pipeline (150), the third brake pipeline (130) is configured to provide brake force for a first group of wheels (43, 44), and a first control valve (32) is disposed on the third brake pipeline (130), to control connection/disconnection of the third brake pipeline (130); and
the second brake pipeline (120) communicates with a fourth brake pipeline (140), the fourth brake pipeline (140) communicates with the fifth brake pipeline (150), the first brake pipeline (110) communicates with the fourth brake pipeline (140) by using the fifth brake pipeline (150), the fourth brake pipeline (140) is configured to provide brake force for a second group of wheels (45, 46), and a second control valve (34) is disposed on the fourth brake pipeline (140), to control connection/disconnection of the fourth brake pipeline (140),
**characterized in that** the first hydraulic adjustment apparatus (107) has a two-way pressurization function.

2. The hydraulic adjustment unit according to claim 1,
wherein in a forward pressurization process a volume of the second hydraulic cavity (27) is compressed and a volume of the first hydraulic cavity (25) is increased and brake fluid in the second hydraulic cavity (27) is pressed into the second brake pipeline (120); and
wherein in a backward pressurization process, a volume of the first hydraulic cavity (25) is compressed and a volume of the second hydraulic cavity (27) is increased and brake fluid in the first hydraulic cavity (25) is pressed into the first brake pipeline (110).

3. The hydraulic adjustment unit according to claim 1 or 2, wherein a third control valve (29) is disposed on the first brake pipeline (110), and the third control valve (29) is configured to control connection/disconnection of the first brake pipeline (110), in particular wherein a first one-way valve (28) is further disposed on the first brake pipeline (110), the first one-way valve (28) is connected in parallel with the third control valve (29), and the first one-way valve (28) allows brake fluid in the first hydraulic cavity (25) to flow into the fifth brake pipeline (150), and blocks brake fluid in the fifth brake pipeline (150) from flowing into the first hydraulic cavity (25).

4. The hydraulic adjustment unit according to any one of claims 1 to 3, wherein a fourth control valve (31) is disposed on the second brake pipeline (120), and the fourth control valve (31) is configured to control connection/disconnection of the second brake pipeline (120).

5. The hydraulic adjustment unit according to claim 4, wherein a second one-way valve (30) is further disposed on the second brake pipeline (120), the second one-way valve (30) is connected in parallel with the fourth control valve (31), and the second one-way valve (30) allows brake fluid in the second hydraulic cavity (27) to flow into the fifth brake pipeline (150), and blocks brake fluid in the fifth brake pipeline (150) from flowing into the second hydraulic cavity (27).

6. The hydraulic adjustment unit according to any one of claims 1 to 5, wherein a pressure sensor (33) is disposed on the fifth brake pipeline (150) to detect pressure of the brake fluid in the fifth brake pipeline (150).

7. The hydraulic adjustment unit according to any one of claims 1 to 6, wherein the hydraulic adjustment unit further comprises a second hydraulic adjustment apparatus (108), and the second hydraulic adjustment apparatus (108) separately communicates with the third brake pipeline (130) and the fourth brake pipeline (140) by using the fifth brake pipeline (150), to provide brake force for the first group of wheels (43, 44) and the second group of wheels (45, 46).

8. A braking system, comprising a first group of brake wheel cylinders that provides brake force for a first group of wheels (43, 44), a second group of brake wheel cylinders that provides brake force for a second group of wheels (45, 46), and the hydraulic adjustment unit according to any one of claims 1 to 7, wherein the hydraulic adjustment unit adjusts pressure of brake fluid in the first group of brake wheel cylinders and/or the second group of brake wheel cylinders.

9. A vehicle, comprising a first group of wheels (43, 44), a second group of wheels (45, 46), and the hydraulic adjustment unit according to any one of claims 1 to 7, wherein the hydraulic adjustment unit provides brake force for the first group of wheels (43, 44) and/or the second group of wheels (45, 46).

10. A control method for a braking system, wherein the braking system comprises a first hydraulic adjustment apparatus (107), the first hydraulic adjustment apparatus (107) comprises a first hydraulic cavity (25) and a second hydraulic cavity (27), the first hydraulic cavity (25) communicates with a first brake pipeline (110), the second hydraulic cavity (27) communicates with a second brake pipeline (120), and the first brake pipeline (110) and the second brake pipeline (120) communicate with each other by using a fifth brake pipeline (150);
the first brake pipeline (110) communicates with a third brake pipeline (130), the third brake pipeline (130) communicates with the fifth brake pipeline (150), the second brake pipeline (120) communicates with the third brake pipeline (130) by using the fifth brake pipeline (150), the third brake pipeline (130) is configured to provide brake force for a first group of wheels (43, 44), and a first control valve (32) is disposed on the third brake pipeline (130), to control connection/disconnection of the third brake pipeline (130);
the second brake pipeline (120) communicates with a fourth brake pipeline (140), the fourth brake pipeline (140) communicates with the fifth brake pipeline (150), the first brake pipeline (110) communicates with the fourth brake pipeline (140) by using the fifth brake pipeline (150), the fourth brake pipeline (140) is configured to provide brake force for a second group of wheels (45, 46), and a second control valve (34) is disposed on the fourth brake pipeline (140), to control connection/disconnection of the fourth brake pipeline (140); and
the control method comprises:
generating, by a controller, a control instruction, wherein the control instruction is used to control an open/close state of the first control valve (32) and/or the second control valve (34); and
sending, by the controller, the control instruction to the first control valve (32) and/or the second control valve (34);
**characterized in that** the first hydraulic adjustment apparatus (107) has a two-way pressurization function.

11. The control method according to claim 10, wherein the generating, by a controller, a control instruction comprises:
generating, by the controller, the control instruction, wherein the control instruction is used to control the first control valve (32) to be in a close state and the second control valve (34) to be in an open state, so that the first hydraulic cavity (25) presses brake fluid into the fourth brake pipeline (140) by using the first brake pipeline (110) and the fifth brake pipeline (150) that communicate with each other, to provide brake force for the second group of wheels (45, 46), and the second hydraulic cavity (27) provides brake force for the second group of wheels (45, 46) by using the second brake pipeline (120) and the fourth brake pipeline (140) that communicate with each other.

12. The control method according to claim 11, wherein the generating, by a controller, a control instruction comprises:
if a brake pipeline that is in the braking system and that provides brake force for the first group of wheels (43, 44) leaks, generating, by the controller, the control instruction, wherein the control instruction is used to control the first control valve (32) to be in a close state and the second control valve (34) to be in an open state.

13. The control method according to claim 12, wherein the brake pipeline that is in the braking system and that provides brake force for the first group of wheels (43, 44) comprises a brake pipeline other than the first brake pipeline (110) in the braking system; and
the method further comprises:
driving, by the controller by using a drive apparatus (23), a piston (26) of the hydraulic adjustment apparatus (107) to move forward along an inner wall of a hydraulic cylinder of the hydraulic adjustment apparatus (107), to provide brake force for the second group of wheels (45, 46); and
driving, by the controller by using the drive apparatus (23), the piston (26) to move backward along the inner wall of the hydraulic cylinder, to provide brake force for the second group of wheels (45, 46).

14. A controller, comprising at least one processor and a memory, wherein the at least one processor is coupled to the memory, and is configured to read and execute instructions in the memory, to perform the control method according to any one of claims 10 to 13.

## Patentansprüche

1. Hydraulische Verstelleinheit, umfassend:
eine erste hydraulische Verstellvorrichtung (107), wobei die erste hydraulische Verstellvorrichtung (107) einen ersten hydraulischen Hohlraum (25) und einen zweiten hydraulischen Hohlraum (27) umfasst, der erste hydraulische Hohlraum (25) mit einer ersten Bremsleitung (110) kommuniziert, der zweite hydraulische Hohlraum (27) mit einer zweiten Bremsleitung (120) kommuniziert und die erste Bremsleitung (110) und die zweite Bremsleitung (120) unter Verwendung einer fünften Bremsleitung (150) miteinander kommunizieren;
die erste Bremsleitung (110) mit einer dritten Bremsleitung (130) kommuniziert, die dritte Bremsleitung (130) mit der fünften Bremsleitung (150) kommuniziert, die zweite Bremsleitung (120) mit der dritten Bremsleitung (130) unter Verwendung der fünften Bremsleitung (150) kommuniziert, die dritte Bremsleitung (130) dazu konfiguriert ist, Bremskraft für eine erste Gruppe von Rädern (43, 44) bereitzustellen, und ein erstes Steuerventil (32) an der dritten Bremsleitung (130) angeordnet ist, um eine Verbindung/Trennung der dritten Bremsleitung (130) zu steuern; und
die zweite Bremsleitung (120) mit einer vierten Bremsleitung (140) kommuniziert, die vierte Bremsleitung (140) mit der fünften Bremsleitung (150) kommuniziert, die erste Bremsleitung (110) mit der vierten Bremsleitung (140) unter Verwendung der fünften Bremsleitung (150) kommuniziert, die vierte Bremsleitung (140) dazu konfiguriert ist, Bremskraft für eine zweite Gruppe von Rädern (45, 46) bereitzustellen, und ein zweites Steuerventil (34) an der vierten Bremsleitung (140) angeordnet ist, um eine Verbindung/Trennung der vierten Bremsleitung (140) zu steuern,
**dadurch gekennzeichnet, dass** die erste hydraulische Verstellvorrichtung (107) eine Zweiwege-Druckbeaufschlagungsfunktion aufweist.

2. Hydraulische Verstelleinheit nach Anspruch 1,
wobei bei einem Vorwärtsdruckbeaufschlagungsprozess ein Volumen des zweiten hydraulischen Hohlraums (27) komprimiert wird und ein Volumen des ersten hydraulischen Hohlraums (25) vergrößert wird und Bremsflüssigkeit in dem zweiten hydraulischen Hohlraum (27) in die zweite Bremsleitung (120) gedrückt wird; und
wobei bei einem Rückwärtsdruckbeaufschlagungsprozess ein Volumen des ersten hydraulischen Hohlraums (25) komprimiert wird und ein Volumen des zweiten hydraulischen Hohlraums (27) vergrößert wird und Bremsflüssigkeit in dem ersten hydraulischen Hohlraum (25) in die erste Bremsleitung (110) gedrückt wird.

3. Hydraulische Verstelleinheit nach Anspruch 1 oder 2, wobei ein drittes Steuerventil (29) an der ersten Bremsleitung (110) angeordnet ist und das dritte Steuerventil (29) dazu konfiguriert ist, eine Verbindung/Trennung der ersten Bremsleitung (110) zu steuern, insbesondere wobei ein erstes Einwegventil (28) ferner an der ersten Bremsleitung (110) angeordnet ist, das erste Einwegventil (28) parallel zu dem dritten Steuerventil (29) geschaltet ist, und das erste Einwegventil (28) es Bremsflüssigkeit in dem ersten hydraulischen Hohlraum (25) ermöglicht, in die fünfte Bremsleitung (150) zu strömen, und Bremsflüssigkeit in der fünften Bremsleitung (150) daran hindert, in den ersten hydraulischen Hohlraum (25) zu strömen.

4. Hydraulische Verstelleinheit nach einem der Ansprüche 1 bis 3, wobei ein viertes Steuerventil (31) an der zweiten Bremsleitung (120) angeordnet ist und das vierte Steuerventil (31) dazu konfiguriert ist, eine Verbindung/Trennung der zweiten Bremsleitung (120) zu steuern.

5. Hydraulische Verstelleinheit nach Anspruch 4, wobei ferner ein zweites Einwegventil (30) an der zweiten Bremsleitung (120) angeordnet ist, das zweite Einwegventil (30) parallel zu dem vierten Steuerventil (31) geschaltet ist und das zweite Einwegventil (30) es Bremsflüssigkeit in dem zweiten hydraulischen Hohlraum (27) ermöglicht, in die fünfte Bremsleitung (150) zu strömen, und Bremsflüssigkeit in der fünften Bremsleitung (150) daran hindert, in den zweiten hydraulischen Hohlraum (27) zu strömen.

6. Hydraulische Verstelleinheit nach einem der Ansprüche 1 bis 5, wobei ein Drucksensor (33) an der fünften Bremsleitung (150) angeordnet ist, um einen Druck der Bremsflüssigkeit in der fünften Bremsleitung (150) zu erfassen.

7. Hydraulische Verstelleinheit nach einem der Ansprüche 1 bis 6, wobei die hydraulische Verstelleinheit ferner eine zweite hydraulische Verstellvorrichtung (108) umfasst und die zweite hydraulische Verstellvorrichtung (108) separat mit der dritten Bremsleitung (130) und der vierten Bremsleitung (140) unter Verwendung der fünften Bremsleitung (150) kommuniziert, um Bremskraft für die erste Gruppe von Rädern (43, 44) und die zweite Gruppe von Rädern (45, 46) bereitzustellen.

8. Bremssystem, umfassend eine erste Gruppe von Bremsradzylindern, die Bremskraft für eine erste Gruppe von Rädern (43, 44) bereitstellt, eine zweite Gruppe von Bremsradzylindern, die Bremskraft für eine zweite Gruppe von Rädern (45, 46) bereitstellt, und die hydraulische Verstelleinheit nach einem der Ansprüche 1 bis 7, wobei die hydraulische Verstelleinheit einen Druck von Bremsflüssigkeit in der ersten Gruppe von Bremsradzylindern und/oder der zweiten Gruppe von Bremsradzylindern verstellt.

9. Fahrzeug, umfassend eine erste Gruppe von Rädern (43, 44), eine zweite Gruppe von Rädern (45, 46) und die hydraulische Verstelleinheit nach einem der Ansprüche 1 bis 7, wobei die hydraulische Verstelleinheit eine Bremskraft für die erste Gruppe von Rädern (43, 44) und/oder die zweite Gruppe von Rädern (45, 46) bereitstellt.

10. Steuerungsverfahren für ein Bremssystem, wobei das Bremssystem eine erste hydraulische Verstellvorrichtung (107) umfasst, die erste hydraulische Verstellvorrichtung (107) einen ersten hydraulischen Hohlraum (25) und einen zweiten hydraulischen Hohlraum (27) umfasst, der erste hydraulische Hohlraum (25) mit einer ersten Bremsleitung (110) kommuniziert, der zweite hydraulische Hohlraum (27) mit einer zweiten Bremsleitung (120) kommuniziert und die erste Bremsleitung (110) und die zweite Bremsleitung (120) unter Verwendung einer fünften Bremsleitung (150) miteinander kommunizieren;
die erste Bremsleitung (110) mit einer dritten Bremsleitung (130) kommuniziert, die dritte Bremsleitung (130) mit der fünften Bremsleitung (150) kommuniziert, die zweite Bremsleitung (120) mit der dritten Bremsleitung (130) unter Verwendung der fünften Bremsleitung (150) kommuniziert, die dritte Bremsleitung (130) dazu konfiguriert ist, Bremskraft für eine erste Gruppe von Rädern (43, 44) bereitzustellen, und ein erstes Steuerventil (32) an der dritten Bremsleitung (130) angeordnet ist, um eine Verbindung/Trennung der dritten Bremsleitung (130) zu steuern;
die zweite Bremsleitung (120) mit einer vierten Bremsleitung (140) kommuniziert, die vierte Bremsleitung (140) mit der fünften Bremsleitung (150) kommuniziert, die erste Bremsleitung (110) mit der vierten Bremsleitung (140) unter Verwendung der fünften Bremsleitung (150) kommuniziert, die vierte Bremsleitung (140) dazu konfiguriert ist, Bremskraft für eine zweite Gruppe von Rädern (45, 46) bereitzustellen, und ein zweites Steuerventil (34) an der vierten Bremsleitung (140) angeordnet ist, um eine Verbindung/Trennung der vierten Bremsleitung (140) zu steuern; und
das Steuerungsverfahren Folgendes umfasst:
Erzeugen, durch eine Steuerung, einer Steueranweisung, wobei die Steueranweisung verwendet wird, um einen offenen/geschlossenen Zustand des ersten Steuerventils (32) und/oder des zweiten Steuerventils (34) zu steuern; und
Senden, durch die Steuerung, der Steueranweisung an das erste Steuerventil (32) und/oder das zweite Steuerventil (34);
**dadurch gekennzeichnet, dass** die erste hydraulische Verstellvorrichtung (107) eine Zweiwege-Druckbeaufschlagungsfunktion aufweist.

11. Steuerungsverfahren nach Anspruch 10, wobei das Erzeugen, durch eine Steuerung, einer Steueranweisung Folgendes umfasst:
Erzeugen, durch die Steuerung, der Steueranweisung, wobei die Steueranweisung verwendet wird, um das erste Steuerventil (32) in einem geschlossenen Zustand zu steuern und das zweite Steuerventil (34) in einem geöffneten Zustand zu steuern, sodass der erste hydraulische Hohlraum (25) Bremsflüssigkeit unter Verwendung der ersten Bremsleitung (110) und der fünften Bremsleitung (150), die miteinander kommunizieren, in die vierte Bremsleitung (140) drückt, um eine Bremskraft für die zweite Gruppe von Rädern (45, 46) bereitzustellen, und der zweite hydraulische Hohlraum (27) eine Bremskraft für die zweite Gruppe von Rädern (45, 46) unter Verwendung der zweiten Bremsleitung (120) und der vierten Bremsleitung (140), die miteinander kommunizieren, bereitstellt.

12. Steuerungsverfahren nach Anspruch 11, wobei das Erzeugen, durch eine Steuerung, einer Steueranweisung Folgendes umfasst:
wenn eine Bremsleitung, die sich im Bremssystem befindet und die eine Bremskraft für die erste Gruppe von Rädern (43, 44) bereitstellt, undicht ist, Erzeugen, durch die Steuerung, der Steueranweisung, wobei die Steueranweisung verwendet wird, um das erste Steuerventil (32) in einen geschlossenen Zustand und das zweite Steuerventil (34) in einen offenen Zustand zu steuern.

13. Steuerungsverfahren nach Anspruch 12, wobei die Bremsleitung, die sich in dem Bremssystem befindet und eine Bremskraft für die erste Gruppe von Rädern (43, 44) bereitstellt, eine Bremsleitung umfasst, die von der ersten Bremsleitung (110) in dem Bremssystem verschieden ist; und
das Verfahren ferner Folgendes umfasst:
Antreiben, durch die Steuerung unter Verwendung einer Antriebsvorrichtung (23), eines Kolbens (26) der hydraulischen Verstellvorrichtung (107), sich entlang einer Innenwand eines hydraulischen Zylinders der hydraulischen Verstellvorrichtung (107) vorwärtszubewegen, um eine Bremskraft für die zweite Gruppe von Rädern (45, 46) bereitzustellen; und
Antreiben, durch die Steuerung unter Verwendung der Antriebsvorrichtung (23), des Kolbens (26), sich entlang der Innenwand des hydraulischen Zylinders rückwärtszubewegen, um eine Bremskraft für die zweite Gruppe von Rädern (45, 46) bereitzustellen.

14. Steuerung, umfassend mindestens einen Prozessor und einen Speicher, wobei der mindestens eine Prozessor mit dem Speicher gekoppelt ist und dazu konfiguriert ist, Anweisungen in dem Speicher zu lesen und auszuführen, um das Steuerungsverfahren nach einem der Ansprüche 10 bis 13 durchzuführen.

## Revendications

1. Une unité de réglage hydraulique, comprenant :
un premier appareil de réglage hydraulique (107), dans lequel le premier appareil de réglage hydraulique (107) comprend une première cavité hydraulique (25) et une seconde cavité hydraulique (27), la première cavité hydraulique (25) communique avec une première conduite de frein (110), la seconde cavité hydraulique (27) communique avec une seconde conduite de frein (120), et la première conduite de frein (110) et la seconde conduite de frein (120) communiquent entre elles en utilisant une cinquième conduite de frein (150) ;
la première conduite de frein (110) communique avec une troisième conduite de frein (130), la troisième conduite de frein (130) communique avec la cinquième conduite de frein (150), la deuxième conduite de frein (120) communique avec la troisième conduite de frein (130) en utilisant la cinquième conduite de frein (150), la troisième conduite de frein (130) est configurée pour fournir une force de freinage à un premier groupe de roues (43, 44), et une première soupape de commande (32) est disposée sur la troisième conduite de frein (130), pour commander la connexion/déconnexion de la troisième conduite de frein (130) ; et
la deuxième conduite de frein (120) communique avec une quatrième conduite de frein (140), la quatrième conduite de frein (140) communique avec la cinquième conduite de frein (150), la première conduite de frein (110) communique avec la quatrième conduite de frein (140) en utilisant la cinquième conduite de frein (150), la quatrième conduite de frein (140) est configurée pour fournir une force de freinage à un second groupe de roues (45, 46), et une seconde soupape de commande (34) est disposée sur la quatrième conduite de frein (140), pour commander la connexion/déconnexion de la quatrième conduite de frein (140),
**caractérisé en ce que** le premier appareil de réglage hydraulique (107) a une fonction de pressurisation bidirectionnelle.

2. L'unité de réglage hydraulique selon la revendication 1,
dans laquelle, lors d'un processus de pressurisation avant, un volume de la seconde cavité hydraulique (27) est comprimé et un volume de la première cavité hydraulique (25) est augmenté et un fluide de freinage dans la seconde cavité hydraulique (27) est pressé dans la seconde conduite de frein (120) ; et
dans laquelle, lors d'un processus de pressurisation à rebours, un volume de la première cavité hydraulique (25) est comprimé et un volume de la seconde cavité hydraulique (27) est augmenté et un fluide de freinage dans la première cavité hydraulique (25) est pressé dans la première conduite de frein (110).

3. Unité de réglage hydraulique selon la revendication 1 ou 2, dans laquelle une troisième soupape de commande (29) est disposée sur la première conduite de frein (110), et en ce que la troisième soupape de commande (29) est configurée pour commander la connexion/déconnexion de la première conduite de frein (110), en particulier dans laquelle une première soupape unidirectionnelle (28) est également disposée sur la première conduite de frein (110), la première soupape unidirectionnelle (28) est connectée en parallèle avec la troisième soupape de commande (29), et la première soupape unidirectionnelle (28) autorise du fluide de frein dans la première cavité hydraulique (25) pour s'écouler dans la cinquième conduite de frein (150), et empêche le fluide de frein dans la cinquième conduite de frein (150) de s'écouler dans la première cavité hydraulique (25).

4. Unité de réglage hydraulique selon l'une quelconque des revendications 1 à 3, dans laquelle une quatrième soupape de commande (31) est disposée sur la deuxième conduite de frein (120), et en ce que la quatrième soupape de commande (31) est configurée pour commander la connexion/déconnexion de la deuxième conduite de frein (120).

5. Unité de réglage hydraulique selon la revendication 4, dans laquelle une deuxième soupape unidirectionnelle (30) est en outre disposée sur la deuxième conduite de frein (120), la deuxième soupape unidirectionnelle (30) est connectée en parallèle avec la quatrième soupape de commande (31), et la deuxième soupape unidirectionnelle (30) permet au fluide de frein dans la deuxième cavité hydraulique (27) de s'écouler dans la cinquième conduite de frein (150), et empêche le fluide de frein dans la cinquième conduite de frein (150) de s'écouler dans la deuxième cavité hydraulique (27).

6. Unité de réglage hydraulique selon l'une quelconque des revendications 1 à 5, dans laquelle un capteur de pression (33) est disposé sur la cinquième conduite de frein (150) pour détecter la pression du fluide de frein dans la cinquième conduite de frein (150).

7. Unité de réglage hydraulique selon l'une quelconque des revendications 1 à 6, dans laquelle l'unité de régalage hydraulique comprend également un deuxième dispositif de réglage hydraulique (108), et le deuxième dispositif de réglage hydraulique (108) communique séparément avec la troisième conduite de frein (130) et la quatrième conduite de frein (140) en utilisant la cinquième conduite de frein (150), pour fournir une force de freinage au premier groupe de roues (43, 44) et au deuxième groupe de roues (45, 46).

8. Système de freinage, comprenant un premier groupe de cylindres de roue de frein qui fournit une force de freinage pour un premier groupe de roues (43, 44), un second groupe de cylindres de roue de frein qui fournit une force de freinage pour un second groupe de roues (45, 46), et l'unité de réglage hydraulique selon l'une quelconque des revendications 1 à 7, dans laquelle l'unité de réglage hydraulique règle la pression de fluide de frein dans le premier groupe de cylindres de roue de frein et/ou le second groupe de cylindres de roue de frein.

9. Véhicule, comprenant un premier groupe de roues (43, 44), un second groupe de roues (45, 46), et l'unité de réglage hydraulique selon l'une quelconque des revendications 1 à 7, dans laquelle l'unité de réglage hydraulique fournit une force de freinage pour le premier groupe de roues (43, 44) et/ou le second groupe de roues (45, 46).

10. Procédé de commande d'un système de freinage, dans lequel le système de freinage comprend un premier appareil de réglage hydraulique (107), le premier appareil de réglage hydraulique (107) comprend une première cavité hydraulique (25) et une seconde cavité hydraulique (27), la première cavité hydraulique (25) communique avec une première conduite de frein (110), la seconde cavité hydraulique (27) communique avec une seconde conduite de frein (120), et la première conduite de frein (110) et la seconde conduite de frein (120) communiquent entre elles en utilisant une cinquième conduite de frein (150) ;
la première conduite de frein (110) communique avec une troisième conduite de frein (130), la troisième conduite de frein (130) communique avec la cinquième conduite de frein (150), la deuxième conduite de frein (120) communique avec la troisième conduite de frein (130) en utilisant la cinquième conduite de frein (150), la troisième conduite de frein (130) est configurée pour fournir une force de freinage à un premier groupe de roues (43, 44), et une première soupape de commande (32) est disposée sur la troisième conduite de frein (130), pour commander la connexion/déconnexion de la troisième conduite de frein (130) ;
la deuxième conduite de frein (120) communique avec une quatrième conduite de frein (140), la quatrième conduite de frein (140) communique avec la cinquième conduite de frein (150), la première conduite de frein (110) communique avec la quatrième conduite de frein (140) en utilisant la cinquième conduite de frein (150), la quatrième conduite de frein (140) est configurée pour fournir une force de freinage à un second groupe de roues (45, 46), et une seconde soupape de commande (34) est disposée sur la quatrième conduite de frein (140), pour commander la connexion/déconnexion de la quatrième conduite de frein (140) ; et
le procédé de commande comprend :
générer, par un contrôleur, une instruction de commande, dans lequel l'instruction de commande est utilisée pour commander un état d'ouverture/fermeture de la première soupape de commande (32) et/ou de la deuxième soupape de commande (34) ; et
envoyer, par le contrôleur, de l'instruction de commande à la première soupape de commande (32) et/ou à la deuxième soupape de commande (34) ;
**caractérisé en ce que** le premier appareil de réglage hydraulique (107) a une fonction de pressurisation bidirectionnelle.

11. Procédé de commande selon la revendication 10, dans lequel la génération, par un contrôleur, d'une instruction de commande comprend :
générer, par le contrôleur, l'instruction de commande, dans lequel l'instruction de commande est utilisée pour commander la première soupape de commande (32) pour qu'elle soit dans un état fermé et la seconde soupape de commande (34) pour qu'elle soit dans un état ouvert, de sorte que la première cavité hydraulique (25) presse le fluide de freinage dans la quatrième conduite de frein (140) en utilisant la première conduite de frein (110) et la cinquième conduite de frein (150) qui communiquent entre elles, pour fournir une force de freinage pour le second groupe de roues (45, 46), et la seconde cavité hydraulique (27) fournit une force de freinage pour le second groupe de roues (45, 46) en utilisant la deuxième conduite de frein (120) et la quatrième conduite de frein (140) qui communiquent entre elles.

12. Procédé de commande selon la revendication 11, dans lequel la génération, par un contrôleur, d'une instruction de commande comprend :
en cas de fuite d'une conduite de frein qui est dans le système de freinage et qui fournit une force de freinage pour le premier groupe de roues (43, 44), générer, par le dispositif de commande, l'instruction de commande, dans lequel l'instruction de commande est utilisée pour commander la première soupape de commande (32) pour qu'elle soit dans un état fermé et la seconde soupape de commande (34) pour qu'elle soit dans un état ouvert.

13. Procédé de commande selon la revendication 12, dans lequel la conduite de frein du système de freinage, qui fournit une force de freinage au premier groupe de roues (43, 44), comporte une conduite de frein autre que la première conduite de frein (110) dans le système de freinage ; et
le procédé comprend également :
l'entraînement, par le dispositif de commande au moyen d'un appareil d'entraînement (23), d'un piston (26) de l'appareil de réglage hydraulique (107) pour avancer le long d'une paroi interne d'un cylindre hydraulique de l'appareil de réglage hydraulique (107), pour fournir une force de freinage pour le second groupe de roues (45, 46) ; et
l'entraînement, par le dispositif de commande à l'aide de l'appareil d'entraînement (23), du piston (26) pour se déplacer vers l'arrière le long de la paroi interne du cylindre hydraulique, pour fournir une force de freinage pour le second groupe de roues (45, 46).

14. Un contrôleur, comprenant au moins un processeur et une mémoire, dans lequel au moins un processeur est couplé à la mémoire et est configuré à lire et exécuter des instructions dans la mémoire pour réaliser le procédé de contrôle selon l'une quelconque des revendications 10 à 13.
